(19) Europäisches Patentamt / European Patent Office / Office européen des brevets

(11) **EP 3 854 913 A1**

## (12) EUROPEAN PATENT APPLICATION
published in accordance with Art. 153(4) EPC

(43) Date of publication:
**28.07.2021 Bulletin 2021/30**

(21) Application number: **19862108.8**

(22) Date of filing: **12.09.2019**

(51) Int Cl.:
*C25B 15/00* (2006.01)    *B32B 7/00* (2019.01)
*C25B 11/00* (2021.01)

(86) International application number:
**PCT/JP2019/035859**

(87) International publication number:
**WO 2020/059627 (26.03.2020 Gazette 2020/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.09.2018 JP 2018177171**
**21.09.2018 JP 2018177302**

(71) Applicant: **Asahi Kasei Kabushiki Kaisha Tokyo 1000006 (JP)**

(72) Inventors:
• **FUNAKAWA, Akiyasu**
  **Tokyo 100-0006 (JP)**
• **KADO, Yoshifumi**
  **Tokyo 100-0006 (JP)**
• **MORIKAWA, Takuya**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **LAMINATE, LAMINATE STORAGE METHOD, LAMINATE SHIPPING METHOD, PROTECTIVE LAMINATE, AND WOUND BODY THEREOF**

(57)    A laminate having:
an electrode for electrolysis, and a membrane laminated on the electrode for electrolysis, wherein
when the laminate is wetted with a 3 mol/L NaCl aqueous solution, and under a storage condition at ordinary temperature,
an amount of a transition metal component (with the proviso that zirconium is excluded), detected from the membrane after storage for 96 hours, is 100 cps or less; and
A protective laminate having:
a first electrode for electrolysis,
a second electrode for electrolysis,
a membrane disposed between the first electrode for electrolysis and the second electrode for electrolysis, and
an insulation sheet that protects at least one of the surface of the first electrode for electrolysis and the surface of the second electrode for electrolysis.

Fig.6

EP 3 854 913 A1

**Description**

Technical Field

The present invention relates to a laminate, a method for storing a laminate, a method for transporting a laminate, a protective laminate, and a wound body thereof.

Background Art

For electrolysis of an alkali metal chloride aqueous solution such as salt solution and electrolysis of water, methods by use of an electrolyzer including a membrane, more specifically an ion exchange membrane or microporous membrane have been employed.
This electrolyzer includes many electrolytic cells connected in series therein, in many cases. A membrane is interposed between each of electrolytic cell to perform electrolysis.
In an electrolytic cell, a cathode chamber including a cathode and an anode chamber including an anode are disposed back to back with a partition wall (back plate) interposed therebetween or via pressing by means of press pressure, bolt tightening, or the like.
Conventionally, the anode and the cathode for use in these electrolyzers are each fixed to the anode chamber or the cathode chamber of an electrolytic cell by a method such as welding and folding, and thereafter, stored or transported to customers.
Meanwhile, each membrane in a state of being singly wound around a vinyl chloride (VC) pipe is stored or transported to customers. Each customer arranges the electrolytic cell on the frame of an electrolyzer and interposes the membrane between electrolytic cells to assemble the electrolyzer. In this manner, electrolytic cells are produced, and an electrolyzer is assembled by each customer.
Patent Literatures 1 and 2 each disclose a structure formed by integrating a membrane and an electrode as a structure applicable to such an electrolyzer.

Citation List

Patent Literature

Patent Literature 1
Japanese Patent Laid-Open No. 58-048686
Patent Literature 2
Japanese Patent Laid-Open No. 55-148775

Summary of Invention

Technical Problem

When electrolysis operation is started and continued, each part deteriorates and electrolytic performance are lowered due to various factors, and each part is replaced at a certain time point.
The membrane can be relatively easily renewed by extracting from an electrolytic cell and inserting a new membrane.
In contrast, the anode and the cathode are fixed to the electrolytic cell, and thus, there is a problem of occurrence of an extremely complicated work on renewing the electrode, in which the electrolytic cell is removed from the electrolyzer and conveyed to a dedicated renewing plant, fixing such as welding is removed and the old electrode is striped off, then a new electrode is placed and fixed by a method such as welding, and the cell is conveyed to the electrolysis plant and placed back to the electrolyzer.
It is considered herein that the structure formed by integrating a membrane and an electrode via thermal compression described in Patent Literatures 1 and 2 is used for the renewing described above, but the structure, which can be produced at a laboratory level relatively easily, is not easily produced so as to be adapted to an electrolytic cell in an actual commercially-available size (e.g., 1.5 m in length, 3 m in width). Moreover, electrolytic performance (such as electrolysis voltage, current efficiency, and common salt concentration in caustic soda) and durability are extremely poor, and chlorine gas and hydrogen gas are generated on the electrode interfacing the membrane. Thus, when used in electrolysis for a long period, complete delamination occurs, and the structure cannot be practically used.

With respect to the structures suggested in Patent Literatures 1 and 2, a method for storing the same or a method for transporting the same is not especially referred to.

Conventionally, an example of the storing method and transport method is a method in which a membrane in a state of being singly wound around a roll is transported and/or stored and then newly thermally compressed to an electrode. However, the method has poor working efficiency and has a problem of causing the characteristics of the membrane to deteriorate due to migration of the metal component(s) of the electrode to the surface of the membrane over time after thermal compression of the electrode and the membrane.

Additionally, as conventional storing methods and transporting methods, it is conceived that membranes and electrodes to be used in electrolyzers are stored and transported in the form of a laminate including each membrane and each electrode integrated and then shipped to customers. As such shipping forms of laminates, a form of a plurality of laminates stacked in a flat placed state and a form of laminates each wounded around a vinyl chloride pipes or the like are usually used. When such forms are employed, there is a problem in that the electrodes for electrolysis are likely to corrode during storage and transport.

Thus, it is an object of the present invention to provide, as a first embodiment, a laminate of an electrode for electrolysis and a membrane, the laminate being capable of improving the work efficiency during renewing of the electrode for electrolysis and the membrane in an electrolyzer, exhibiting excellent electrolytic performance also after renewing, and further maintaining the excellent electrolytic performance for a long period.

It is an object of the present invention to provide, as a second embodiment, a protective laminate and a wound body including an electrode for electrolysis and a membrane, the protective laminate and the wound body being capable of reducing corrosion in the electrode for electrolysis in a shipping form.

Solution to Problem

As a result of the intensive studies to solve the above problems, the present inventors have found that, in a laminate comprising an electrode for electrolysis caused to adhere to a membrane such as an ion exchange membrane or a microporous membrane with a weak force, the working efficiency for renewing the electrode for electrolysis and membrane is improved, excellent electrolytic performance can be exhibited also after renewing, and further the excellent electrolytic performance can be maintained for a long period by moistening the laminate with a NaCl aqueous solution having a predetermined concentration, storing the wetted laminate under storage conditions at ordinary temperature for a predetermined period, and then identifying the amount of a transition metal component(s) (with the proviso that zirconium is excluded) to be detected from the membrane, thereby having completed the first embodiment of the present invention.

The present inventors also have found that, in a laminate including a first electrode for electrolysis, a second electrode for electrolysis, and a membrane disposed between the first electrode for electrolysis and the second electrode for electrolysis, the above problems can be solved by disposing an insulation sheet on at least one of the surface of the first electrode for electrolysis and the surface of the second electrode for electrolysis, thereby having completed the second embodiment of the present invention.

That is to say, the present invention is as set forth below.

[1] A laminate comprising:

an electrode for electrolysis, and
a membrane laminated on the electrode for electrolysis, wherein
when the laminate is wetted with a 3 mol/L NaCl aqueous solution, and under a storage condition at ordinary temperature, an amount of a transition metal component (with the proviso that zirconium is excluded), detected from the membrane after the storage for 96 hours, is 100 cps or less.

[2] The laminate according to [1], wherein the transition metal is at least one selected from the group consisting of Ni and Ti.

[3] The laminate according to [1] or [2], wherein,
when the laminate is wetted with a 3 mol/L NaCl aqueous solution is stored under the storage condition at ordinary temperature,
an amount of a transition metal component detected from the membrane before the storage for 96 hours is denoted by X; and
the amount of a transition metal component detected from the membrane after the storage for 96 hours under storage conditions at ordinary temperature is denoted by Y,
(Y/X) is 20 or less.

[4] The laminate according to any one of [1] to [3], wherein
the laminate is wetted with the 3 mol/L NaCl aqueous solution, and in a stage before storage for 96 hours under the storage condition at ordinary temperature,
the electrode for electrolysis constituting the laminate is wetted with an aqueous solution having a pH $\geq$ 10.
[5] The laminate according to any one of [1] to [4], comprising an ion impermeable layer between the electrode for electrolysis and the membrane.
[6] The laminate according to [5], wherein the ion impermeable layer is at least one selected from the group consisting of a fluorine polymer and a hydrocarbon polymer.
[7] A method for storing a laminate comprising:

an electrode for electrolysis, and
a membrane laminated on the electrode for electrolysis, wherein
when the laminate is wetted with a 3 mol/L NaCl aqueous solution, and under a storage condition at ordinary temperature, an amount of transition metal components (with the proviso that zirconium is excluded), detected from the membrane after the storage for 96 hours, is maintained within 100 cps or less.

[8] The method for storing a laminate according to [7], wherein
the electrode for electrolysis is brought into a state where the electrode is wetted with the aqueous solution having a pH $\geq$ 10,
in a stage before the electrode wetted with the 3 mol/L NaCl aqueous solution is stored for 96 hours under the storage condition at ordinary temperature.
[9] The method for storing a laminate according to [7] or [8], wherein an ion impermeable layer is disposed between the electrode for electrolysis and the membrane.
[10] The method for storing a laminate according to any one of [7] to [9], wherein the laminate is stored in a state of a wound body in which the laminate is wound.
[11] A method for transporting a laminate comprising:

an electrode for electrolysis, and
a membrane laminated on the electrode for electrolysis, wherein
during the transport,
when the laminate is wetted with a 3 mol/L NaCl aqueous solution, and under a storage condition at ordinary temperature, an amount of a transition metal component(with the proviso that zirconium is excluded), detected from the membrane after the storage for 96 hours, is maintained within 100 cps or less.

[12] The method for transporting a laminate according to [11], wherein the electrode for electrolysis is transported in a state where the electrode is wetted with an aqueous solution having a pH $\geq$ 10.
[13] The method for transporting a laminate according to [11] or [12], wherein
the laminate is transported in a state where an ion impermeable layer is disposed between the electrode for electrolysis and the membrane.
[14] The method for transporting a laminate according to any one of [11] to [13], wherein the laminate is transported in a state of a wound body in which the laminate is wound.
[15] A protective laminate comprising a first electrode for electrolysis, a second electrode for electrolysis, a membrane disposed between the first electrode for electrolysis and the second electrode for electrolysis, and an insulation sheet that protects at least one of a surface of the first electrode for electrolysis and a surface of the second electrode for electrolysis.
[16] The protective laminate according to [15], wherein a material for forming the insulation sheet is a flexible material.
[17] The protective laminate according to [16], wherein the flexible material is at least one selected from the group consisting of a resin that is solid at ordinary temperature, an oil that is solid at ordinary temperature, and paper.
[18] The protective laminate according to any one of [15] to [17], wherein the material for forming the insulation sheet is a rigid material.
[19] The protective laminate according to [18], wherein the rigid material is at least one selected from the group consisting of a resin that is solid at ordinary temperature and paper.
[20] The protective laminate according to any one of [15] to [19], wherein the material for forming the insulation sheet is a material having a peelable property.
[21] The protective laminate according to [20], wherein the material having a peelable property is at least one selected from the group consisting of a resin that is solid at ordinary temperature, an oil that is solid at ordinary temperature, and paper.
[22] A wound body comprising wound protective laminate according to any one of [15] to [22].

Advantageous Effects of Invention

According to a laminate of an electrode for electrolysis and a membrane in the first embodiment of the present invention, it is possible to improve the work efficiency during renewing of the electrode for electrolysis and the membrane in an electrolyzer, exhibit excellent electrolytic performance also after renewing, and further maintain the excellent electrolytic performance for a long period.

According to a protective laminate and a wound body in the second embodiment of the present invention, it is possible to reduce corrosion in the electrode for electrolysis in a shipping form.

Brief Description of Drawings

[Figure 1] Figure 1 illustrates a cross-sectional schematic view of an electrode for electrolysis constituting a laminate.

[Figure 2] Figure 2 illustrates a cross-sectional schematic view showing one embodiment of an ion exchange membrane.

[Figure 3] Figure 3 illustrates a schematic view for explaining the aperture ratio of reinforcement core materials constituting the ion exchange membrane.

[Figure 4(A)] Figure 4(A) illustrates a schematic view before formation of continuous holes for explaining a method for forming continuous holes of the ion exchange membrane.

[Figure 4(B)] Figure 4(B) illustrates a schematic view after formation of continuous holes for explaining a method for forming continuous holes of the ion exchange membrane.

[Figure 5] Figure 5 illustrates a cross-sectional schematic view of an electrolytic cell.

[Figure 6] Figure 6 illustrates a cross-sectional schematic view showing a state of two electrolytic cells connected in series.

[Figure 7] Figure 7 illustrates a schematic view of an electrolyzer.

[Figure 8] Figure 8 illustrates a schematic perspective view showing a step of assembling the electrolyzer.

[Figure 9] Figure 9 illustrates a cross-sectional schematic view of a reverse current absorber included in the electrolytic cell.

[Figure 10] Figure 10 illustrates a cross-sectional schematic view of a plurality of protective laminates of the second embodiment stacked in a flat placed state.

[Figure 11] Figure 11 illustrates a cross-sectional schematic view of the protective laminate of the second embodiment wounded.

[Figure 12] Figure 12 illustrates a cross-sectional schematic view of a plurality of common laminates stacked in a flat placed state.

[Figure 13] Figure 13 illustrates a cross-sectional schematic view of a common laminate wounded.

Description of Embodiments

Hereinbelow, the embodiments of the present invention (hereinbelow, may be referred to as the present embodiments) will be each described in detail, with reference to drawings as required.

The embodiments below are illustration for explaining the present invention, and the present invention is not limited to the contents below.

The accompanying drawings illustrate one example of the embodiments, and embodiments should not be construed to be limited thereto.

The present invention may be appropriately modified and carried out within the spirit thereof. In the drawings, positional relations such as top, bottom, left, and right are based on the positional relations shown in the drawing unless otherwise noted. The dimensions and ratios in the drawings are not limited to those shown.

[Laminate in first embodiment]

A laminate of the first embodiment of the present invention has
an electrode for electrolysis, and
a membrane laminated on the electrode for electrolysis, wherein
when the laminate is wetted with a 3 mol/L NaCl aqueous solution, and under storage conditions at ordinary temperature, an amount of a transition metal component(s) (with the proviso that zirconium is excluded), detected from the membrane after storage for 96 hours, is 100 cps or less.

The laminate of the first embodiment may be one immediately after the electrode for electrolysis and the membrane are laminated or one in a state in which the laminate is wetted with a predetermined solution as long as the amount of the transition metal component(s) detected from the membrane after the predetermined storage conditions is 100 cps or less.

Zirconium is excluded from the transition metal component(s) detected from the membrane because zirconium is included for the purpose of imparting hydrophilicity to the membrane.

The electrode for electrolysis constituting an electrolyzer that conducts electrolysis of an alkali metal chloride aqueous solution such as salt solution and electrolysis of water usually includes a transition metal component(s).

A preferred aspect of the membrane of the laminate of the first embodiment is an ion exchange membrane.

When the laminate in which the electrode for electrolysis and ion exchange membrane are laminated is assembled in an electrolyzer, the electrode for electrolysis and the ion exchange membrane are in contact with each other, and thus, a trace amount of the transition metal component(s) eluted from the electrode for electrolysis may be attached to the ion exchange membrane.

Specifically, in the case where Ni is used as the substrate for electrode for electrolysis or as a material of a catalyst layer, $Ni^{2+}$ or $Ni(OH)_2$ is generated when the electrode for electrolysis is immersed in an aqueous solution having a low pH.

$Ni^{2+}$ easily dissolves in water in an acidic region, and $Ni(OH)_2$ slightly dissolves in water to generate $Ni^{2+}$ in a basic region.

$Ni^{2+}$ generated as described above may be ion exchanged with $-SO_3^-Na^+$ and $-COO^-Na^+$, which are ion exchange groups possessed by the ion exchange membrane, causing deterioration of the characteristics of the ion exchange membrane.

Examples of the transition metal component(s) eluted from the electrode for electrolysis include, in addition to Ni, various metal components such as Ti, V, Cr, Mn, Fe, Co, Zn, Mo, Ru, Ir, Pd, Pt, Ag, Sn, Ta, W, Pb, La, Ce, Pr, Nd, Pm, and Sm, depending on the substrate of the electrode for electrolysis and the material of the catalyst layer and the like. Such transition metal components are ion exchanged, similarly to Ni, with ion exchange groups to cause deterioration of the characteristics of the ion exchange membrane.

In the first embodiment of the present invention, in a laminate having an electrode for electrolysis and a membrane laminated on the electrode for electrolysis, when the laminate is wetted with a 3 mol/L NaCl aqueous solution and stored for 96 hours under storage conditions at ordinary temperature, the amount of the transition metal component(s) (with the proviso that zirconium is excluded) detected from the membrane is identified to be 100 cps or less. The amount is preferably 90 cps or less, more preferably 50 cps or less.

The "ordinary temperature" herein is intended to be 20°C to 30°C.

When the amount of the transition metal component(s) under the above conditions is identified to be 100 cps or less, the ion exchange performance of the membrane can be practically sufficiently maintained, and the excellent electrolytic performance can be maintained for a long period.

The transition metal component(s) detected from the membrane can be measured by XRF (X-ray Fluorescence), specifically can be measured by a method described in Example mentioned below.

In the laminate of the first embodiment of the present invention, in the case where the laminate is wetted with a 3 mol/L NaCl aqueous solution and stored for 96 hours under storage conditions at ordinary temperature, when the amount of the transition metal component(s) detected from the membrane before storage is denoted by X and the amount of the transition metal component(s) detected from the membrane after storage is denoted by Y, (Y/X) is preferably 20 or less.

(Y/X) is more preferably 15 or less, further preferably 10 or less.

Thereby, the ion exchange performance of the membrane can be practically sufficiently maintained, and the excellent electrolytic performance can be maintained for a long period.

As described above, in the case where, after storage of the laminate under predetermined storage conditions, the amount of the transition metal component(s) detected from the membrane is controlled to 100 cps or less or where the laminate is stored under the predetermined storage conditions described above, it is effective to bring the electrode for electrolysis constituting the laminate into a state where the electrode is wetted with an aqueous solution having a pH $\geq$ 10 in order to control the (Y/X) to 20 or less.

Specifically, the membrane constituting the laminate is equilibrated with an aqueous solution having a pH $\geq$ 10 in advance, and the membrane and the electrode for electrolysis are laminated to thereby enable the electrode for electrolysis to be brought into a state where the electrode is wetted with the aqueous solution having a pH $\geq$ 10. Thereby, elution of the transition metal component(s) from the electrode for electrolysis can be effectively suppressed.

Examples of the aqueous solution having a pH $\geq$ 10 include aqueous solutions obtained by dissolving a hydroxide of an alkali metal or tetraalkylammonium. Specific examples include sodium hydroxide, potassium hydroxide, lithium hydroxide, tetramethylammonium hydroxide, and tetraethylammonium hydroxide.

Examples of a method of bringing the membrane into a state where the membrane is immersed with an aqueous solution having a pH $\geq$ 10 include a method of spraying the aqueous solution onto the membrane, a method of immersing the membrane in a container filled with the aqueous solution, and a method of immersing the membrane in the aqueous solution and then sealing the membrane in a resin bag.

Additionally, as described above, in the case where, after storage of the laminate under predetermined storage conditions, the amount of the transition metal component(s) detected from the membrane is controlled to 100 cps or less or where the laminate is stored under the predetermined storage conditions described above, it is effective to interpose an ion impermeable layer between the electrode for electrolysis and the membrane constituting the laminate in order to control the (Y/X) to 20 or less.

Specifically, interposing a resin film between the electrode for electrolysis and the membrane can effectively suppress attachment of the transition metal component(s) eluted from the electrode for electrolysis to the membrane.

Examples of the ion impermeable layer include a fluorine polymer or a hydrocarbon polymer having a film thickness of the order of 1 to 500 $\mu$m. Examples of the fluorine polymer include PTFE, PFA, ETFE, and PVDF. Examples of the hydrocarbon polymer include PE, PP, PVA, PET, PVC, PVDC, and PMMA.

[Method for storing laminate]

In a method for storing a laminate of the first embodiment of the present invention, when a laminate having an electrode for electrolysis and a membrane laminated on the electrode for electrolysis is wetted with a 3 mol/L NaCl aqueous solution and stored for 96 hours under storage conditions at ordinary temperature, the laminate is stored such that the amount of the transition metal component(s) (with the proviso that zirconium is excluded) detected from the membrane is 100 cps or less.

The amount is preferably 90 cps or less, more preferably 50 cps or less.

The "ordinary temperature" is intended to be 20°C to 30°C.

According to the above, the ion exchange performance of the membrane can be practically sufficiently maintained, and the excellent electrolytic performance can be maintained for a long period in the case where the laminate after storage is assembled in an electrolyzer.

During storage, the laminate may be in a state where a flat electrode for electrolysis and a membrane are laminated or may be in a state of a wound body wound around a roll having a predetermined diameter. Thereby, the laminate can be downsized, and its handling property can be further improved.

In the method for storing a laminate of the first embodiment of the present invention, when the laminate is wetted with a 3 mol/L NaCl aqueous solution and stored for 96 hours under storage conditions at ordinary temperature, it is effective to store the electrode for electrolysis constituting the laminate in a state where the electrode is wetted with an aqueous solution having a pH $\geq$ 10 in order to store the laminate such that the amount of the transition metal component(s) (with the proviso that zirconium is excluded) detected from the membrane is 100 cps or less.

Specifically, the membrane is equilibrated with an aqueous solution having a pH $\geq$ 10 in advance, and the membrane and the electrode for electrolysis are laminated to thereby enable the electrode for electrolysis to be brought into a state where the electrode is wetted with the aqueous solution having a pH $\geq$ 10. Thereby, elution of the transition metal component(s) from the electrode for electrolysis can be effectively suppressed.

Examples of the aqueous solution having a pH $\geq$ 10 include aqueous solutions obtained by dissolving a hydroxide of an alkali metal or tetraalkylammonium. Specific examples include sodium hydroxide, potassium hydroxide, lithium hydroxide, tetramethylammonium hydroxide, and tetraethylammonium hydroxide.

In the method for storing a laminate of the first embodiment of the present invention, when the laminate is wetted with a 3 mol/L NaCl aqueous solution and stored for 96 hours under storage conditions at ordinary temperature, it is effective to store the laminate in a state where an ion impermeable layer is interposed between the electrode for electrolysis and the membrane constituting the laminate in order to store the laminate such that the amount of the transition metal component(s) (with the proviso that zirconium is excluded) detected from the membrane is 100 cps or less.

Specifically, interposing a resin film between the electrode for electrolysis and the membrane can effectively suppress attachment of the transition metal component(s) eluted from the electrode for electrolysis to the membrane.

Examples of the ion impermeable layer include a fluorine polymer or a hydrocarbon polymer having a film thickness of the order of 1 to 500 $\mu$m. Examples of the fluorine polymer include PTFE, PFA, ETFE, and PVDF. Examples of the hydrocarbon polymer include PE, PP, PVA, PET, PVC, PVDC, and PMMA.

[Method for transporting laminate]

In a method for transporting a laminate of the first embodiment of the present invention, when a laminate having an electrode for electrolysis and a membrane laminated on the electrode for electrolysis is wetted with a 3 mol/L NaCl aqueous solution and stored for 96 hours under storage conditions at ordinary temperature, the laminate is transported such that the amount of the transition metal component(s) (with the proviso that zirconium is excluded) detected from the membrane is 100 cps or less.

The amount is preferably 90 cps or less, more preferably 50 cps or less.

"Transport" is clearly distinguished from the "storage" described above in respect that the laminate does not stay at a certain point.

The "ordinary temperature" is intended to be 20°C to 30°C.

According to the above, the ion exchange performance of the membrane can be practically sufficiently maintained, and the excellent electrolytic performance can be maintained for a long period in the case where the laminate after transport is assembled in an electrolyzer.

The laminate to be transported may be in a state where a flat electrode for electrolysis and a membrane are laminated or may be in a state of a wound body wound around a roll having a predetermined diameter. Thereby, the laminate can be downsized, and its handling property can be further improved.

In the method for transporting a laminate of the first embodiment of the present invention, when the laminate is wetted with a 3 mol/L NaCl aqueous solution and stored for 96 hours under storage conditions at ordinary temperature, it is effective to transport the electrode for electrolysis constituting the laminate in a state where the electrode is wetted with an aqueous solution having a $pH \geq 10$ in order to transport the laminate such that the amount of the transition metal component(s) (with the proviso that zirconium is excluded) detected from the membrane is 100 cps or less.

Specifically, the membrane is equilibrated with an aqueous solution having a $pH \geq 10$ in advance, and the membrane and the electrode for electrolysis are laminated to thereby enable the electrode for electrolysis to be brought into a state where the electrode is wetted with the aqueous solution having a $pH \geq 10$. Thereby, elution of the transition metal component(s) from the electrode for electrolysis can be effectively suppressed.

Examples of the aqueous solution having a $pH \geq 10$ include aqueous solutions obtained by dissolving a hydroxide of an alkali metal or tetraalkylammonium. Specific examples thereof include sodium hydroxide, potassium hydroxide, lithium hydroxide, tetramethylammonium hydroxide, and tetraethylammonium hydroxide.

In the method for transporting a laminate of the first embodiment of the present invention, when the laminate is wetted with a 3 mol/L NaCl aqueous solution and stored for 96 hours under storage conditions at ordinary temperature, it is effective to transport the laminate in a state where an ion impermeable layer is interposed between the electrode for electrolysis and the membrane constituting the laminate in order to transport the laminate such that the amount of the transition metal component(s) (with the proviso that zirconium is excluded) detected from the membrane is 100 cps or less.

Specifically, interposing a resin film between the electrode for electrolysis and the membrane can effectively suppress attachment of the transition metal component(s) eluted from the electrode for electrolysis to the membrane.

Examples of the ion impermeable layer include a fluorine polymer or a hydrocarbon polymer having a film thickness of the order of 1 to 500 $\mu$m. Examples of the fluorine polymer include PTFE, PFA, ETFE, and PVDF. Examples of the hydrocarbon polymer include PE, PP, PVA, PET, PVC, PVDC, and PMMA.

[Protective laminate in second embodiment]

A protective laminate of the second embodiment includes a first electrode for electrolysis, a second electrode for electrolysis, a membrane disposed between the first electrode for electrolysis and the second electrode for electrolysis, and an insulation sheet that protects at least one of the surface of the first electrode for electrolysis and the surface of the second electrode for electrolysis. Hereinbelow, the first electrode for electrolysis and the second electrode for electrolysis are each simply referred to as the "electrode for electrolysis".

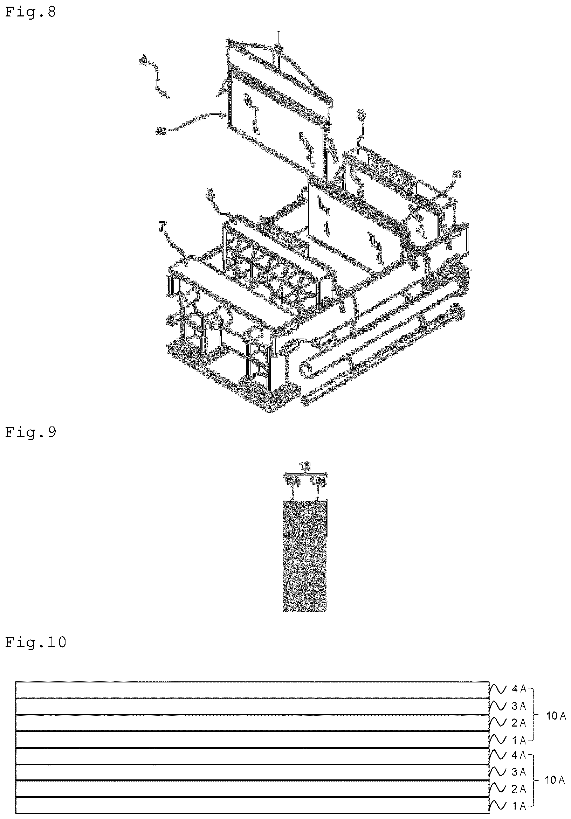

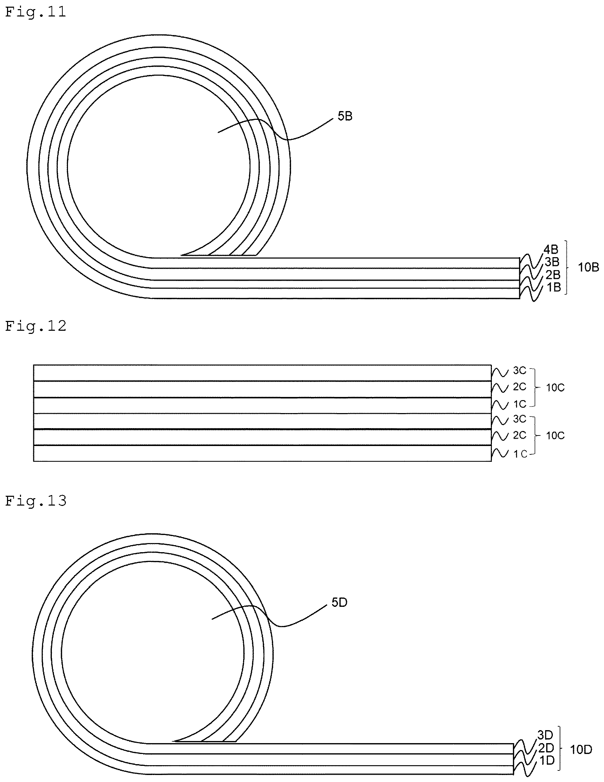

Figure 10 and Figure 11 respectively illustrate a cross-sectional schematic view of a plurality of the protective laminates stacked in a flat placed state and a cross-sectional schematic view of the protective laminate wounded.

The form shown in Figure 10 is a form in which two laminates 10A are stacked, the laminates 10A each including a first electrode for electrolysis 1A, a membrane 2A, a second electrode for electrolysis 3A, and an insulation sheet 4A laminated in this order. The form shown in Figure 11 is a form in which a laminate 10B is wound around a core body 5B such as a vinyl chloride pipe, the laminate 10B including a first electrode for electrolysis 1B, a membrane 2B, a second electrode for electrolysis 3B, and an insulation sheet 4B laminated in this order.

Membranes and electrodes for electrolysis to be used in electrolyzers are often stored or transported in a form of a laminate including each membrane and each electrode for electrolysis integrated for shipment to customers. As such shipping forms of laminates, a form of a plurality of laminates stacked in a flat placed state and a form of a laminate wounded around a vinyl chloride pipes or the like are usually used.

Figure 12 and Figure 13 respectively illustrate a cross-sectional schematic view of a plurality of common laminates stacked in a flat placed state and a cross-sectional schematic view of the common laminate wounded.

The form shown in Figure 12 is a form in which two laminates 10C are stacked, the laminates 10C each including a first electrode for electrolysis 1C, a membrane 2C, and a second electrode for electrolysis 3C laminated in this order. The form shown in Figure 13 is a form in which a laminate 10D is wound around a core body 5D such as a vinyl chloride pipe, the laminate 10D including a first electrode for electrolysis 1D, a membrane 2D, and a second electrode for electrolysis 3D laminated in this order.

The present inventors have found that, when such forms are employed, there is a problem in that the electrode for electrolysis is likely to corrode while stored and transported. The present inventors have made further intensive studies to have found that, in the shipping forms described above, the electrodes for electrolysis each having a different composition are likely to be in contact with each other and thus, the electrodes for electrolysis tend to corrode. The present inventors have made further intensive studies based on the finding to have found that, in the laminates shown in Figure 12 and Figure 13, disposing an insulation sheet on at least one of the surface of the first electrode for electrolysis and the surface of the second electrode for electrolysis makes these electrodes for electrolysis unlikely to be in contact with each other, like the protective laminates shown in Figure 10 and Figure 11, to thereby result in suppression of corrosion of the electrodes for electrolysis. Although the description mentioned above includes inferential description, the present invention is not limited by this description in any way.

(First electrode for electrolysis and second electrode for electrolysis)

The first electrode for electrolysis and the second electrode for electrolysis constituting the protective laminate of the second embodiment are not particularly limited as long as each having a forming material of a different composition, and these electrodes may have the same shape and physical properties.

The first electrode for electrolysis and the second electrode for electrolysis each may have a catalyst layer of a different composition, and the substrates for electrode for electrolysis may have the same composition and shape.

Both the first electrode for electrolysis and the second electrode for electrolysis may be used as an anode for common salt electrolysis, or one of the first electrode for electrolysis and the second electrode for electrolysis may be used as an anode for common salt electrolysis, and the other of the first electrode for electrolysis and the second electrode for electrolysis may be used as a cathode for common salt electrolysis described below.

Alternatively, both the first electrode for electrolysis and the second electrode for electrolysis may be used as a cathode for electrolysis (e.g., a cathode for common salt electrolysis, a cathode for water electrolysis, or a fuel cell positive electrode), or one of the first electrode for electrolysis and the second electrode for electrolysis may be used as an anode for electrolysis (e.g., an anode for common salt electrolysis, an anode for water electrolysis, or a fuel cell negative electrode) and the other of the first electrode for electrolysis and the second electrode for electrolysis may be used as a cathode for electrolysis described below.

(Insulation sheet)

The protective laminate in the second embodiment includes an insulation sheet that protects at least one of the surface of the first electrode for electrolysis and the surface of the second electrode for electrolysis.

The insulation sheet is only required to protect a portion at which the first electrode for electrolysis and the second electrode for electrolysis are in contact in a shipping form, and it is not necessary to protect the entire surface of the first electrode for electrolysis or the second electrode for electrolysis.

The insulation sheet constituting the protective laminate of the second embodiment is not particularly limited as long as the sheet is formed of an insulation material and has a sheet-like form.

The material for forming the insulation sheet is preferably a flexible material. When the material for forming the insulation sheet is a flexible material, on winding the protective laminate, for example, the insulation sheet follows the anode and cathode to be more likely to be wound. Thus, delamination of the insulation sheet from the anode and cathode can be suppressed.

Examples of the material for forming the insulation sheet include resins that are solid at ordinary temperature, oils that are solid at ordinary temperature, and paper. Among these, at least one selected from the group consisting of resins that are solid at ordinary temperature, oils that are solid at ordinary temperature, and paper is preferred.

Examples of the resins that are solid at ordinary temperature include hydrocarbon polymers, fluorine polymers, and rubbers. Examples of the hydrocarbon polymers include polyethylene, polypropylene, polyvinyl chloride, polyvinylidene chloride, polyethylene terephthalate, polyester, and polyvinyl alcohol. Examples of the fluorine polymer include Teflon(R) and tetrafluoroethylene-perfluoroalkoxy ethylene copolymer resin (PFA). Example of the rubbers include synthetic rubber, natural rubber, and silicone rubber.

Example of the oils that are solid at ordinary temperature includes electrical insulating oils described in JIS C 2320.

Example of the paper includes paper mainly based on cellulose. A water repellent may be applied to the surface of the paper.

The material for forming the insulation sheet is preferably a rigid material. When the material for forming the insulation sheet is a rigid material, a stable state can be maintained even if a large number of protective laminates are stacked in a flat placed state. Thus, the stability in the case of stacking the laminates in a flat placed state is excellent.

Examples of the rigid material include resins that are solid at ordinary temperature and paper. Among these, at least one selected from the group consisting of resins that are solid at ordinary temperature and paper is preferred.

Examples of the resins include acrylic resin, polycarbonate resin, polyvinyl chloride resin, acrylonitrile-butadiene-styrene copolymer resin, epoxy resin, phenol resin, polyethylene, polypropylene, polyvinyl chloride, polyethylene terephthalate, polyester, polyvinyl alcohol, Teflon(R), and tetrafluoroethylene-perfluoroalkoxy ethylene copolymer resin (PFA). Among these resins, resins used as the flexible material are included. With an increased thickness of the insulation sheet, such a resin used as the flexible material is also used as a resin for use in the rigid material.

Example of the paper includes paper mainly based on cellulose. For example, paper pulp and the like described in the JIS P standards can be used.

The material for forming the insulation sheet is preferably a material having a peelable property. When the material for forming the insulation sheet is a material having a peelable property, for example, the insulation sheet is more likely to be peeled off from the surface of the anode or cathode. Thus, the handleability is excellent on use in an electrolyzer.

Examples of the material having a peelable property include resins that are solid at ordinary temperature, oils that are solid at ordinary temperature, and paper. Among these, at least one selected from the group consisting of resins that are solid at ordinary temperature, oils that are solid at ordinary temperature, and paper is preferred.

Examples of the resins that are solid at ordinary temperature include resins exemplified in the section of the flexible material and rigid material.

Example of the oils that are solid at ordinary temperature includes electrical insulating oils described in JIS C 2320.

Example of the paper includes paper mainly based on cellulose.

The protective laminate of the second embodiment may be wound to be a wound body.

The wound body of the protective laminate of the second embodiment, obtained by downsizing the protective laminate by winding, can have an improved handling property.

[Configuration of laminate for use in electrolysis]

The laminate of the first embodiment described above comprises an electrode for electrolysis and a membrane laminated on the electrode for electrolysis, wherein the amount of transition metal component(s) detected from the membrane after storage under the predetermined conditions is 100 cps or less.

The protective laminate of the second embodiment described above comprises a first electrode for electrolysis, a second electrode for electrolysis, a membrane disposed between the first electrode for electrolysis and the second electrode for electrolysis, and an insulation sheet that protects at least one of the surface of the first electrode for electrolysis and the surface of the second electrode for electrolysis.

When the laminate of the first embodiment or the protective laminate of the second embodiment is assembled in an electrolyzer in the case where electrolysis of an alkali metal chloride aqueous solution such as salt solution or electrolysis of water is practically conducted, the above-described "ion impermeable layer", which is interposed, as required, between the electrode for electrolysis and membrane, and the "insulation sheet", which protects the surface of the electrode for electrolysis, are not included in the form of the laminate. The laminate having a configuration in which the electrode for electrolysis and the membrane are laminated when assembled in an electrolyzer as above is referred to as the "laminate of the present embodiment" hereinbelow.

In the laminate of the present embodiment, the force applied per unit mass·unit area of the electrode for electrolysis on the membrane or feed conductor in the electrolyzer is preferably 1.5 N/mg·cm$^2$ or less.

The laminate of the present embodiment, as configured as described above, can improve the work efficiency during electrode and laminate renewing in an electrolyzer and further, can exhibit excellent electrolytic performance also after renewing.

That is, according to the laminate of the present embodiment, on renewing the electrode, the electrode can be renewed by a work as simple as renewing the membrane, without a complicated work such as stripping off the existing electrode fixed on the electrolytic cell, and thus, the work efficiency is markedly improved.

Further, according to the laminate of the present embodiment, it is possible to maintain or improve the electrolytic performance of a new electrode. Thus, the electrode fixed on a conventional new electrolytic cell and serving as an anode and/or a cathode is only required to serve as a feed conductor. Thus, it may be also possible to markedly reduce or eliminate catalyst coating.

The laminate of the present embodiment can be stored or transported to customers in a state where the laminate is wound around a vinyl chloride pipe or the like (in a rolled state or the like), making handling markedly easier. During such storage or transport, the amount of the transition metal component(s) detected from the membrane after storage under the predetermined conditions is maintained at 100 cps or less as in the first embodiment, or an insulation sheet that protects the surface of the electrode for electrolysis is provided as in the second embodiment.

As the feed conductor, various substrates mentioned below such as a degraded electrode (i.e., the existing electrode) and an electrode having no catalyst coating can be employed.

The laminate of the present embodiment may have partially a fixed portion as long as the laminate has the configuration described above. That is, in the case where the laminate of the present embodiment has a fixed portion, a portion not having the fixing is subjected to measurement, and the resulting force applied per unit mass-unit area of the electrode for electrolysis is preferably less than 1.5 N/mg·cm$^2$.

(Electrode for electrolysis)

The electrode for electrolysis constituting the laminate of the present embodiment (including any of the electrode for electrolysis constituting the laminate of the first embodiment and the first and second electrodes for electrolysis constituting the protective laminate of the second embodiment) has a force applied per unit mass-unit area of preferably less than 1.5 N/mg·cm$^2$, more preferably 1.2 N/mg·cm$^2$ or less, further preferably 1.20 N/mg·cm$^2$ or less, further more preferably 1.1 N/mg·cm$^2$ or less, even further preferably 1.10 N/mg·cm$^2$ or less, still more preferably 1.0 N/mg·cm$^2$ or less, even still more preferably 1.00 N/mg·cm$^2$ or less from the viewpoint of enabling a good handling property to be provided and having a good adhesive force to a membrane such as an ion exchange membrane and a microporous membrane, a feed conductor (a degraded electrode and an electrode having no catalyst coating), and the like.

The force applied per unit mass-unit area of the electrode for electrolysis is preferably more than 0.005 N/(mg·cm$^2$), more preferably 0.08 N/(mg·cm$^2$) or more, further preferably 0.1 N/mg·cm$^2$ or more, further more preferably 0.14 N/(mg·cm$^2$) or more from the viewpoint of further improving the electrolytic performance. The force applied per unit mass-unit area of the electrode for electrolysis is further more preferably 0.2 N/(mg·cm$^2$) or more from the viewpoint of further facilitating handling in a large size (e.g., a size of 1.5 m $\times$ 2.5 m).

The force applied described above can be within the range described above by appropriately adjusting an opening ratio described below, thickness of the electrode for electrolysis, arithmetic average surface roughness, and the like, for example. More specifically, for example, a higher opening ratio tends to lead to a smaller force applied, and a lower opening ratio tends to lead to a larger force applied.

The mass per unit area of the electrode for electrolysis is preferably 48 mg/cm$^2$ or less, more preferably 30 mg/cm$^2$ or less, further preferably 20 mg/cm$^2$ or less from the viewpoint of enabling a good handling property to be provided, having a good adhesive force to a membrane such as an ion exchange membrane and a microporous membrane, a degraded electrode, a feed conductor having no catalyst coating, and of economy, and furthermore preferably 15 mg/cm$^2$ or less from the comprehensive viewpoint including handling property, adhesion, and economy. The lower limit value is not particularly limited but is of the order of 1 mg/cm$^2$, for example.

The mass per unit area described above can be within the range described above by appropriately adjusting an opening ratio described below, thickness of the electrode, and the like, for example. More specifically, for example, when the thickness is constant, a higher opening ratio tends to lead to a smaller mass per unit area, and a lower opening ratio tends to lead to a larger mass per unit area.

The force applied can be measured by methods (i) or (ii) described below.

As for the force applied, the value obtained by the measurement of the method (i) (also referred to as "the force applied (1)") and the value obtained by the measurement of the method (ii) (also referred to as "the force applied (2)") may be the same or different, and either of the values is less than 1.5 N/ mg·cm$^2$.

<Method (i)>

A nickel plate obtained by blast processing with alumina of grain-size number 320 (thickness 1.2 mm, 200 mm square), an ion exchange membrane which is obtained by applying inorganic material particles and a binder to both surfaces of a membrane of a perfluorocarbon polymer into which an ion exchange group is introduced (170 mm square, the detail of the ion exchange membrane referred to herein is as described in Examples), and a sample of electrode (130 mm square) are laminated in this order. After this laminate is sufficiently immersed in pure water, excess water deposited on the surface of the laminate is removed to obtain a sample for measurement.

The arithmetic average surface roughness (Ra) of the nickel plate after the blast treatment is 0.5 to 0.8 μm. The specific method for calculating the arithmetic average surface roughness (Ra) is as described in Examples.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the ion exchange membrane and the mass of the portion overlapping the ion exchange membrane in the sample of electrode to calculate the force applied per unit mass-unit area (1) (N/mg·cm$^2$).

The force applied per unit mass·unit area (1) obtained by the method (i) is preferably less than 1.5 N/mg·cm$^2$, more preferably 1.2 N/mg·cm$^2$ or less, further preferably 1.20 N/mg·cm$^2$ or less, further more preferably 1.1 N/mg·cm$^2$ or less, more further preferably 1.10 N/mg·cm$^2$ or less, still more preferably 1.0 N/mg·cm$^2$ or less, even still more preferably 1.00 N/mg·cm$^2$ or less from the viewpoint of enabling a good handling property to be provided and having a good adhesive force to a membrane such as an ion exchange membrane and a microporous membrane, a degraded electrode, and a feed conductor having no catalyst coating.

The force is preferably more than 0.005 N/ (mg·cm$^2$), more preferably 0.08 N/(mg·cm$^2$) or more, further preferably 0.1 N/(mg·cm$^2$) or more from the viewpoint of further improving the electrolytic performance, and furthermore, is further more preferably 0.14 N/ (mg·cm$^2$), still more preferably 0.2 N/(mg·cm$^2$) or more from the viewpoint of further facilitating handling in a large size (e.g., a size of 1.5 m × 2.5 m).

When the electrode for electrolysis satisfies the force applied (1), the electrode can be integrated with a membrane such as an ion exchange membrane and a microporous membrane or a feed conductor, for example, and used (i.e., as a laminate). Thus, on renewing the electrode, the substituting work for the cathode and anode fixed on the electrolytic cell by a method such as welding is eliminated, and the work efficiency is markedly improved.

Additionally, by use of the electrode for electrolysis as a laminate integrated with the ion exchange membrane, microporous membrane, or feed conductor, it is possible to make the electrolytic performance comparable to or higher than those of a new electrode.

On shipping a new electrolytic cell, an electrode fixed on an electrolytic cell has been subjected to catalyst coating conventionally. Since only combination of an electrode having no catalyst coating with the electrode for electrolysis constituting the laminate of the present embodiment can allow the electrode to function as an electrode, it is possible to markedly reduce or eliminate the production step and the amount of the catalyst for catalyst coating. A conventional electrode of which catalyst coating is markedly reduced or eliminated can be electrically connected to the electrode for electrolysis and allowed to serve as a feed conductor for passage of an electric current.

<Method (ii)>

A nickel plate obtained by blast processing with alumina of grain-size number 320 (thickness 1.2 mm, 200 mm square, a nickel plate similar to that of the method (i) above) and a sample of electrode (130 mm square) are laminated in this order. After this laminate is sufficiently immersed in pure water, excess water deposited on the surface of the laminate is removed to obtain a sample for measurement.

Under conditions of a temperature of 23±2°C and a relative humidity of 30±5%, only the sample of electrode in this sample for measurement is raised in a vertical direction at 10 mm/minute using a tensile and compression testing machine, and the load when the sample of electrode is raised by 10 mm in a vertical direction is measured. This measurement is repeated three times, and the average value is calculated.

This average value is divided by the area of the overlapping portion of the sample of electrode and the nickel plate and the mass of the sample of electrode in the portion overlapping the nickel plate to calculate the adhesive force per unit mass-unit area (2) (N/mg·cm$^2$) .

The force applied per unit mass·unit area (2) obtained by the method (ii) is preferably less than 1.5 N/mg·cm$^2$, more preferably 1.2 N/mg·cm$^2$ or less, further preferably 1.20 N/mg·cm$^2$ or less, further more preferably 1.1 N/mg·cm$^2$ or less, more further preferably 1.10 N/mg·cm$^2$ or less, still more preferably 1.0 N/mg·cm$^2$ or less, even still more preferably 1.00 N/mg·cm$^2$ or less from the viewpoint of enabling a good handling property to be provided and having a good adhesive force to a membrane such as an ion exchange membrane and a microporous membrane, a degraded electrode, and a feed conductor having no catalyst coating.

The force is preferably more than 0.005 N/ (mg·cm$^2$), more preferably 0.08 N/(mg·cm$^2$) or more, further preferably 0.1 N/(mg·cm$^2$) or more from the viewpoint of further improving the electrolytic performance, and is further more preferably 0.14 N/(mg·cm$^2$) or more from the viewpoint of further facilitating handling in a large size (e.g., a size of 1.5 m × 2.5 m).

The electrode for electrolysis constituting the laminate of the present embodiment, if satisfies the force applied (2), can be stored or transported to customers in a state where the electrode is wound around a vinyl chloride pipe or the like (in a rolled state or the like), making handling markedly easier. By attaching the electrode for electrolysis of the present embodiment to a degraded existing electrode to provide a laminate, it is possible to make the electrolytic performance comparable to or higher than those of a new electrode.

In the electrode for electrolysis constituting the laminate of the present embodiment, from the viewpoint that the electrode for electrolysis, if being an electrode having a broad elastic deformation region, can provide a better handling property and has a better adhesive force to a membrane such as an ion exchange membrane and a microporous membrane, a degraded electrode, a feed conductor having no catalyst coating, and the like, the thickness of the electrode for electrolysis is preferably 315 μm or less, more preferably 220 μm or less, further preferably 170 μm or less, further more preferably 150 μm or less, particularly preferably 145 μm or less, still more preferably 140 μm or less, even still more preferably 138 μm or less, further still more preferably 135 μm or less.

Further, from a similar viewpoint as above, the thickness is preferably 130 $\mu$m or less, more preferably less than 130 $\mu$m, further preferably 115 $\mu$m or less, further more preferably 65 $\mu$m or less. The lower limit value is not particularly limited, but is preferably 1 $\mu$m or more, more preferably 5 $\mu$m or more for practical reasons, more preferably 20 $\mu$m or more.

In the present embodiment, "having a broad elastic deformation region" means that, when an electrode for electrolysis is wound to form a wound body, warpage derived from winding is unlikely to occur after the wound state is released. The thickness of the electrode for electrolysis refers to, when a catalyst layer mentioned below is included, the total thickness of both the substrate for electrode for electrolysis and the catalyst layer.

The electrode for electrolysis constituting the laminate of the present embodiment preferably includes a substrate for electrode for electrolysis and a catalyst layer.

The thickness of the substrate for electrode for electrolysis (gauge thickness) is not particularly limited, but is preferably 300 $\mu$m or less, more preferably 205 $\mu$m or less, further preferably 155 $\mu$m or less, further preferably 135 $\mu$m or less, particularly preferably 125 $\mu$m or less, still more preferably 120 $\mu$m or less, even still more preferably 100 $\mu$m or less from the viewpoint of enabling a good handling property to be provided, having a good adhesive force to a membrane such as an ion exchange membrane and a microporous membrane, a degraded electrode (feed conductor), and an electrode (feed conductor) having no catalyst coating, being capable of being suitably rolled in a roll and satisfactorily folded, and facilitating handling in a large size (e.g., a size of 1.5 m $\times$ 2.5 m), and further still more preferably 50 $\mu$m or less from the viewpoint of a handling property and economy.

The lower limit value is not particularly limited, but is 1 $\mu$m, for example, preferably 5 $\mu$m, more preferably 15 $\mu$m.

In the present embodiment, a liquid is preferably interposed between the membrane such as an ion exchange membrane and a microporous membrane and the electrode for electrolysis, or the metal porous plate or metal plate

(i.e., feed conductor) such as a degraded existing electrode and electrode having no catalyst coating and the electrode for electrolysis.

As the liquid, any liquid, such as water and organic solvents, can be used as long as the liquid generates a surface tension. The larger the surface tension of the liquid, the larger the force applied between the membrane and the electrode for electrolysis or the metal porous plate or metal plate and the electrode for electrolysis. Thus, a liquid having a larger surface tension is preferred.

Examples of the liquid include the following (the numerical value in the parentheses is the surface tension of the liquid at 20°C):

hexane (20.44 mN/m), acetone (23.30 mN/m), methanol (24.00 mN/m), ethanol (24.05 mN/m), ethylene glycol (50.21 mN/m), and water (72.76 mN/m).

A liquid having a large surface tension allows the membrane and the electrode for electrolysis or the metal porous plate or metal plate (feed conductor) and the electrode for electrolysis to be integrated (to be a laminate) to thereby facilitate renewing of the electrode. The liquid between the membrane and the electrode for electrolysis or the metal porous plate or metal plate (feed conductor) and the electrode for electrolysis may be present in an amount such that the both adhere to each other by the surface tension. As a result, after the laminate is placed in an electrolytic cell, the liquid, if mixed into the electrolyte solution, does not affect electrolysis itself due to the small amount of the liquid.

From a practical viewpoint, a liquid having a surface tension of 24 mN/m to 80 mN/m, such as ethanol, ethylene glycol, and water, is preferably used as the liquid. Particularly preferred is water or an alkaline aqueous solution prepared by dissolving caustic soda, potassium hydroxide, lithium hydroxide, sodium hydrogen carbonate, potassium hydrogen carbonate, sodium carbonate, potassium carbonate, a hydroxide of tetraalkylammonium, or the like in water. Alternatively, an organic solvent may be mixed in water.

Alternatively, the surface tension can be adjusted by allowing these liquids to contain a surfactant. When a surfactant is contained, the adhesion between the membrane and the electrode for electrolysis or the metal porous plate or metal plate (feed conductor) and the electrode for electrolysis varies to enable the handling property to be adjusted. The surfactant is not particularly limited, and both ionic surfactants and nonionic surfactants may be used.

The proportion measured by the following method (I) of the electrode for electrolysis constituting the laminate of the present embodiment is not particularly limited, but is preferably 90% or more, more preferably 92% or more from the viewpoint of enabling a good handling property to be provided and having a good adhesive force to a membrane such as an ion exchange membrane and a microporous membrane, a degraded electrode (feed conductor), and an electrode (feed conductor) having no catalyst coating, and further preferably 95% or more from the viewpoint of further facilitating handling in a large size (e.g., a size of 1.5 m $\times$ 2.5 m). The upper limit value is 100%.

<Method (I)>

An ion exchange membrane (170 mm square) and a sample of electrode (130 mm square) are laminated in this order. The laminate is placed on a curved surface of a polyethylene pipe (outer diameter: 280 mm) such that the sample of electrode in this laminate is positioned outside under conditions of a temperature of 23$\pm$2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The proportion measured by the following method (3) of the electrode for electrolysis constituting the laminate of the present embodiment is not particularly limited, but is preferably 75% or more, more preferably 80% or more from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and being capable of being suitably rolled in a roll and satisfactorily folded, and is further preferably 90% or more from the viewpoint of further facilitating handling in a large size (e.g., a size of 1.5 m × 2.5 m). The upper limit value is 100%.

<Method (II)>

An ion exchange membrane (170 mm square) and a sample of electrode (130 mm square) are laminated in this order. The laminate is placed on a curved surface of a polyethylene pipe (outer diameter: 145 mm) such that the sample of electrode in this laminate is positioned outside under conditions of a temperature of 23±2°C and a relative humidity of 30±5%, the laminate and the pipe are sufficiently immersed in pure water, excess water deposited on a surface of the laminate and the pipe is removed, and one minute after this removal, then the proportion (%) of an area of a portion in which the ion exchange membrane (170 mm square) is in close contact with the sample of electrode is measured.

The electrode for electrolysis constituting the laminate of the present embodiment preferably has, but is not particularly limited to, a porous structure and an opening ratio or void ratio of 5 to 90% or less, from the viewpoint of enabling a good handling property to be provided, having a good adhesive force to a membrane such as an ion exchange membrane and a microporous membrane, a degraded electrode (feed conductor), and an electrode (feed conductor) having no catalyst coating, and preventing accumulation of gas to be generated during electrolysis. The opening ratio is more preferably 10 to 80% or less, further preferably 20 to 75%.

The opening ratio is a proportion of the opening portions per unit volume. The calculation method may differ depending on that opening portions in submicron size are considered or that only visible openings are considered. Specifically, a volume V can be calculated from the values of the gauge thickness, width, and length of electrode, and further, a weight W is measured to thereby enable an opening ratio A to be calculated by the following formula.

$$A = (1 - (W/(V \times \rho))) \times 100$$

$\rho$ is the density of the electrode material (g/cm$^3$). For example, $\rho$ of nickel is 8.908 g/cm$^3$, and $\rho$ of titanium is 4.506 g/cm$^3$. The opening ratio is appropriately adjusted by changing the area of metal to be perforated per unit area in the case of perforated metal, changing the values of the SW (short diameter), LW (long diameter), and feed in the case of expanded metal, changing the line diameter of metal fiber and mesh number in the case of mesh, changing the pattern of a photoresist to be used in the case of electroforming, changing the metal fiber diameter and fiber density in the case of nonwoven fabric, changing the mold for forming voids in the case of foamed metal, or the like.

The value obtained by measurement by the following method (A) of the electrode for electrolysis constituting the laminate of the present embodiment is preferably 40 mm or less, more preferably 29 mm or less, further preferably 10 mm or less, further more preferably 6.5 mm or less from the viewpoint of the handling property.

<Method (A)>

Under conditions of a temperature of 23±2°C and a relative humidity of 30±5%, a sample of laminate obtained by laminating the ion exchange membrane and the electrode for electrolysis is wound around and fixed onto a curved surface of a core material being made of polyvinyl chloride and having an outer diameter $\phi$ of 32 mm, and left to stand for 6 hours; thereafter, when the electrode for electrolysis is separated from the sample and placed on a flat plate, heights in a vertical direction at both edges of the electrode for electrolysis $L_1$ and $L_2$ are measured, and an average value thereof is used as a measurement value.

In the electrode for electrolysis constituting the laminate of the present embodiment, the ventilation resistance is preferably 24 kPa·s/m or less when the electrode for electrolysis has a size of 50 mm × 50 mm, the ventilation resistance being measured under the conditions of the temperature of 24°C, the relative humidity of 32%, a piston speed of 0.2 cm/s, and a ventilation volume of 0.4 cc/cm$^2$/s (hereinbelow, also referred to as "measurement condition 1") (hereinbelow, also referred to as "ventilation resistance 1"). A larger ventilation resistance means that air is unlikely to flow and refers to a state of a high density. In this state, the product from electrolysis remains in the electrode and the reaction substrate is more unlikely to diffuse inside the electrode, and thus, the electrolytic performance (such as voltage) tends to deteriorate. The concentration on the membrane surface tends to increase. Specifically, the caustic concentration increases on the cathode surface, and the supply of brine tends to decrease on the anode surface. As a result, the product accumulates at a high concentration on the interface at which the membrane is in contact with the electrode. This accumulation leads to damage of the membrane and tends to also lead to increase in the voltage and damage of the membrane on the cathode surface and damage of the membrane on the anode surface.

In order to prevent these defects, the ventilation resistance is preferably set at 24 kPa·s/m or less.

From a similar viewpoint as above, the ventilation resistance is more preferably less than 0.19 kPa·s/m, further preferably 0.15 kPa·s/m or less, further more preferably 0.07 kPa·s/m or less.

When the ventilation resistance is larger than a certain value, NaOH generated in the electrode tends to accumulate on the interface between the electrode and the membrane to result in a high concentration in the case of the cathode, and the supply of brine tends to decrease to cause the brine concentration to be lower in the case of the anode. In order to prevent damage to the membrane that may be caused by such accumulation, the ventilation resistance is preferably less than 0.19 kPa·s/m, more preferably 0.15 kPa·s/m or less, further preferably 0.07 kPa·s/m or less.

In contrast, when the ventilation resistance is low, the area of the electrode is reduced and the electrolysis area is reduced. Thus, the electrolytic performance (such as voltage) tends to deteriorate. When the ventilation resistance is zero, the feed conductor functions as the electrode because no electrode for electrolysis is provided, and the electrolytic performance (such as voltage) tends to markedly deteriorate. From this viewpoint, a preferable lower limit value identified as the ventilation resistance 1 is not particularly limited, but is preferably more than 0 kPa·s/m, more preferably 0.0001 kPa·s/m or more, further preferably 0.001 kPa·s/m or more.

When the ventilation resistance 1 is 0.07 kPa·s/m or less, a sufficient measurement accuracy may not be achieved because of the measurement method therefor. From this viewpoint, it is also possible to evaluate an electrode for electrolysis having a ventilation resistance 1 of 0.07 kPa·s/m or less by means of a ventilation resistance (hereinbelow, also referred to as "ventilation resistance 2") obtained by the following measurement method (hereinbelow, also referred to as "measurement condition 2"). That is, the ventilation resistance 2 is a ventilation resistance measured, when the electrode for electrolysis has a size of 50 mm × 50 mm, under conditions of the temperature of 24°C, the relative humidity of 32%, a piston speed of 2 cm/s, and a ventilation volume of 4 cc/cm$^2$/s.

The ventilation resistances 1 and 2 can be within the range described above by appropriately adjusting an opening ratio, thickness of the electrode, and the like, for example. More specifically, for example, when the thickness is constant, a higher opening ratio tends to lead to smaller ventilation resistances 1 and 2, and a lower opening ratio tends to lead to larger ventilation resistances 1 and 2.

In the electrode for electrolysis constituting the laminate of the present embodiment, as mentioned above, the force applied per unit mass·unit area of the electrode for electrolysis on the membrane or feed conductor is preferably less than 1.5 N/mg·cm$^2$.

In this manner, the electrode for electrolysis abuts with a moderate adhesive force on the membrane or feed conductor (e.g., the existing anode or cathode in the electrolyzer) to thereby enable a laminate with the membrane or feed conductor to be constituted. That is, it is not necessary to cause the membrane or feed conductor to firmly adhere to the electrode for electrolysis by a complicated method such as thermal compression. The laminate is formed only by a relatively weak force, for example, a surface tension derived from moisture contained in the membrane such as an ion exchange membrane and a microporous membrane, and thus, a laminate of any scale can be easily constituted. Additionally, such a laminate exhibits excellent electrolytic performance. Thus, the laminate of the present embodiment is suitable for electrolysis applications, and can be particularly preferably used for applications related to members of electrolyzers and renewing the members.

Hereinbelow, one aspect of the electrode for electrolysis constituting the laminate of the present embodiment will be described.

The electrode for electrolysis preferably includes a substrate for electrode for electrolysis and a catalyst layer.

The catalyst layer may be composed of a plurality of layers as shown below or may be a single-layer configuration.

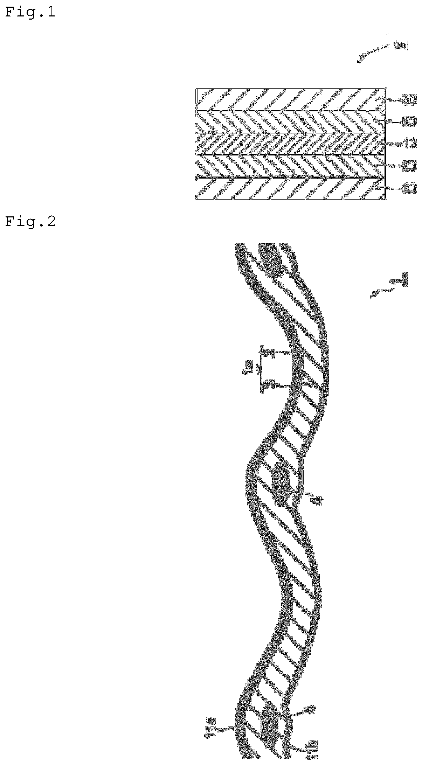

As shown in Figure 1, an electrode for electrolysis 101 includes a substrate for electrode for electrolysis 10 and a pair of first layers 20 with which both the surfaces of the substrate for electrode for electrolysis 10 are covered.

The entire substrate for electrode for electrolysis 10 is preferably covered with the first layers 20. This covering is likely to improve the catalyst activity and durability of the electrode for electrolysis. One first layer 20 may be laminated only on one surface of the substrate for electrode for electrolysis 10.

Also shown in Figure 1, the surfaces of the first layers 20 may be covered with second layers 30. The entire first layers 20 are preferably covered by the second layers 30. Alternatively, one second layer 30 may be laminated only one surface of the first layer 20.

<Substrate for electrode for electrolysis>

As the substrate for electrode for electrolysis 10, for example, nickel, nickel alloys, stainless steel, and further, valve metals including titanium can be used, although not limited thereto. At least one element selected from nickel (Ni) and titanium (Ti) is preferably included.

When stainless steel is used in an alkali aqueous solution of a high concentration, iron and chromium are eluted and the electrical conductivity of stainless steel is of the order of one-tenth of that of nickel. In consideration of the foregoing, a substrate containing nickel (Ni) is preferable as the substrate for electrode for electrolysis.

Alternatively, when the substrate for electrode for electrolysis 10 is used in a salt solution of a high concentration near the saturation under an atmosphere in which chlorine gas is generated, the material of the substrate for electrode 10 is also preferably titanium having high corrosion resistance.

The form of the substrate for electrode for electrolysis 10 is not particularly limited, and a form suitable for the purpose can be selected. Examples of the form include perforated metal, nonwoven fabric, foamed metal, expanded metal, metal porous foil formed by electroforming, and so-called woven mesh produced by knitting metal lines. Among these, a perforated metal or expanded metal is preferable. Electroforming is a technique for producing a metal thin film having a precise pattern by using photolithography and electroplating in combination. It is a method including forming a pattern on a substrate with a photoresist and electroplating the portion not protected by the resist to provide a metal thin film.

As for the form of the substrate for electrode for electrolysis, a suitable specification depends on the distance between the anode and the cathode in the electrolyzer. In the case where the distance between the anode and the cathode is finite, an expanded metal or perforated metal form can be used, and in the case of a so-called zero-gap base electrolyzer, in which the ion exchange membrane is in contact with the electrode, a woven mesh produced by knitting thin lines, wire mesh, foamed metal, metal nonwoven fabric, expanded metal, perforated metal, metal porous foil, and the like can be used, although not limited thereto.

Examples of the substrate for electrode for electrolysis 10 include a metal porous foil, a wire mesh, a metal nonwoven fabric, a perforated metal, an expanded metal, and a foamed metal.

As a plate material before processed into a perforated metal or expanded metal, rolled plate materials and electrolytic foils are preferable. An electrolytic foil is preferably further subjected to a plating treatment by use of the same element as the base material thereof, as the post-treatment, to thereby form asperities on one or both of the surfaces.

The thickness of the substrate for electrode for electrolysis 10 is, as mentioned above, preferably 300 $\mu$m or less, more preferably 205 $\mu$m or less, further preferably 155 $\mu$m or less, further more preferably 135 $\mu$m or less, even further preferably 125 $\mu$m or less, still more preferably 120 $\mu$m or less, even still more preferably 100 $\mu$m or less, and further still more preferably 50 $\mu$m or less from the viewpoint of a handling property and economy. The lower limit value is not particularly limited, but is 1 $\mu$m, for example, preferably 5 $\mu$m, more preferably 15 $\mu$m.

In the substrate for electrode for electrolysis, the residual stress during processing is preferably relaxed by annealing the substrate for electrode for electrolysis in an oxidizing atmosphere. It is preferable to form asperities using a steel grid, alumina powder, or the like on the surface of the substrate for electrode for electrolysis followed by an acid treatment to increase the surface area thereof, in order to improve the adhesion to a catalyst layer with which the surface is covered. Alternatively, it is preferable to give a plating treatment by use of the same element as the substrate to increase the surface area.

To bring the first layer 20 into close contact with the surface of the substrate for electrode for electrolysis 10, the substrate for electrode for electrolysis 10 is preferably subjected to a treatment of increasing the surface area. Examples of the treatment of increasing the surface area include a blast treatment using a cut wire, steel grid, alumina grid or the like, an acid treatment using sulfuric acid or hydrochloric acid, and a plating treatment using the same element to that of the substrate. The arithmetic average surface roughness (Ra) of the substrate surface is not particularly limited, but is preferably 0.05 $\mu$m to 50 $\mu$m, more preferably 0.1 $\mu$m to 10 $\mu$m, further preferably 0.1 $\mu$m to 8 $\mu$m.

Next, a case where the electrode for electrolysis constituting the laminate of the present embodiment is used as an anode for common salt electrolysis will be described.

<First layer>

In Figure 1, a first layer 20 as a catalyst layer contains at least one of ruthenium oxides, iridium oxides, and titanium oxides. Examples of the ruthenium oxide include $RuO_2$. Examples of the iridium oxide include $IrO_2$. Examples of the titanium oxide include $TiO_2$. The first layer 20 preferably contains two oxides: a ruthenium oxide and a titanium oxide or three oxides: a ruthenium oxide, an iridium oxide, and a titanium oxide. This makes the first layer 20 more stable and additionally improves the adhesion with the second layer 30.

When the first layer 20 contains two oxides: a ruthenium oxide and a titanium oxide, the first layer 20 contains preferably 1 to 9 mol, more preferably 1 to 4 mol of the titanium oxide based on 1 mol of the ruthenium oxide contained in the first layer 20. With the composition ratio of the two oxides in this range, the electrode for electrolysis 101 exhibits excellent durability.

When the first layer 20 contains three oxides: a ruthenium oxide, an iridium oxide, and a titanium oxide, the first layer 20 contains preferably 0.2 to 3 mol, more preferably 0.3 to 2.5 mol of the iridium oxide based on 1 mol of the ruthenium oxide contained in the first layer 20. The first layer 20 contains preferably 0.3 to 8 mol, more preferably 1 to 7 mol of the titanium oxide based on 1 mol of the ruthenium oxide contained in the first layer 20. With the composition ratio of the three oxides in this range, the electrode for electrolysis 101 exhibits excellent durability.

When the first layer 20 contains at least two of a ruthenium oxide, an iridium oxide, and a titanium oxide, these oxides preferably form a solid solution. Formation of the oxide solid solution allows the electrode for electrolysis 101 to exhibit excellent durability.

In addition to the compositions described above, oxides of various compositions can be used as long as at least one oxide of a ruthenium oxide, an iridium oxide, and titanium oxide is contained. For example, an oxide coating called DSA(R), which contains ruthenium, iridium, tantalum, niobium, titanium, tin, cobalt, manganese, platinum, and the like, can be used as the first layer 20.

The first layer 20 need not be a single layer and may include a plurality of layers. For example, the first layer 20 may include a layer containing three oxides and a layer containing two oxides. The thickness of the first layer 20 is preferably 0.05 to 10 $\mu$m, more preferably 0.1 to 8 $\mu$m.

<Second layer>

The second layer 30 preferably contains ruthenium and titanium. This enables the chlorine overvoltage immediately after electrolysis to be further lowered.

The second layer 30 preferably contains a palladium oxide, a solid solution of a palladium oxide and platinum, or an alloy of palladium and platinum. This enables the chlorine overvoltage immediately after electrolysis to be further lowered.

A thicker second layer 30 can maintain the electrolytic performance for a longer period, but from the viewpoint of economy, the thickness is preferably 0.05 $\mu$m to 3 $\mu$m.

Next, a case where the electrode for electrolysis constituting the laminate of the present embodiment is used as a cathode for common salt electrolysis will be described.

<First layer>

Examples of components of the first layer 20 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The component of the first layer 20 may or may not contain at least one of platinum group metals, platinum group metal oxides, platinum group metal hydroxides, and alloys containing a platinum group metal.

When the component of the first layer 20 contains at least one of platinum group metals, platinum group metal oxides, platinum group metal hydroxides, and alloys containing a platinum group metal, the platinum group metals, platinum group metal oxides, platinum group metal hydroxides, and alloys containing a platinum group metal preferably contain at least one platinum group metal of platinum, palladium, rhodium, ruthenium, and iridium.

The component of the first layer 20 preferably contains platinum as the platinum group metal.

The component of the first layer 20 preferably contains a ruthenium oxide as the platinum group metal oxide.

The component of the first layer 20 preferably contains a ruthenium hydroxide as the platinum group metal hydroxide.

The component of the first layer 20 preferably contains an alloy of platinum with nickel, iron, and cobalt as the platinum group metal alloy.

The component of the first layer 20 preferably further contains an oxide or hydroxide of a lanthanoid element, as required, as a second component. This allows the electrode for electrolysis 101 to exhibit excellent durability.

The component of the first layer 20 preferably contains at least one selected from lanthanum, cerium, praseodymium, neodymium, promethium, samarium, europium, gadolinium, terbium, and dysprosium.

The component of the first layer 20 preferably further contains an oxide or hydroxide of a transition metal as required, as a third component.

Addition of the third component enables the electrode for electrolysis 101 to exhibit more excellent durability and the electrolysis voltage to be lowered.

Examples of a preferable combination of the component of the first layer 20 include ruthenium only, ruthenium + nickel, ruthenium + cerium, ruthenium + lanthanum, ruthenium + lanthanum + platinum, ruthenium + lanthanum + palladium, ruthenium + praseodymium, ruthenium + praseodymium + platinum, ruthenium + praseodymium + platinum + palladium, ruthenium + neodymium, ruthenium + neodymium + platinum, ruthenium + neodymium + manganese, ruthenium + neodymium + iron, ruthenium + neodymium + cobalt, ruthenium + neodymium + zinc, ruthenium + neodymium + gallium, ruthenium + neodymium + sulfur, ruthenium + neodymium + lead, ruthenium + neodymium + nickel, ruthenium + neodymium + copper, ruthenium + samarium, ruthenium + samarium + manganese, ruthenium + samarium + iron, ruthenium + samarium + cobalt, ruthenium + samarium + zinc, ruthenium + samarium + gallium, ruthenium + samarium + sulfur, ruthenium + samarium + lead, ruthenium + samarium + nickel, platinum + cerium, platinum + palladium + cerium, platinum + palladium + lanthanum + cerium, platinum + iridium, platinum + palladium, platinum + iridium + palladium, platinum + nickel + palladium, platinum + nickel + ruthenium, alloys of platinum and nickel, alloys of platinum and cobalt, and alloys of platinum and iron.

When platinum group metals, platinum group metal oxides, platinum group metal hydroxides, and alloys containing a platinum group metal are not contained, the main component of the catalyst is preferably nickel element.

In such a case, the main component of the catalyst preferably contains at least one of nickel metal, oxides, and hydroxides.

To the main component of the catalyst, a transition metal may be added as the second component. As the second component to be added, at least one element of titanium, tin, molybdenum, cobalt, manganese, iron, sulfur, zinc, copper, and carbon is preferably contained.

Examples of a preferable combination of the main component of the catalyst include nickel + tin, nickel + titanium, nickel + molybdenum, and nickel + cobalt.

As required, an intermediate layer can be placed between the first layer 20 and the substrate for electrode for electrolysis 10.

The durability of the electrode for electrolysis 101 can be improved by placing the intermediate layer.

As the component of the intermediate layer, those having affinity to both the first layer 20 and the substrate for electrode for electrolysis 10 are preferable.

As the component of the intermediate layer, nickel oxides, platinum group metals, platinum group metal oxides, and platinum group metal hydroxides are preferable.

The intermediate layer can be formed by applying and baking a solution containing a component that forms the intermediate layer. Alternatively, a surface oxide layer also can be formed by subjecting a substrate to a thermal treatment at a temperature of 300 to 600°C in an air atmosphere. Besides, the layer can be formed by a known method such as a thermal spraying method and ion plating method.

<Second layer>

Examples of components of the second layer 30 as the catalyst layer include metals such as C, Si, P, S, Al, Ti, V, Cr, Mn, Fe, Co, Ni, Cu, Zn, Y, Zr, Nb, Mo, Ru, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

The second layer 30, as the catalyst layer, may or may not contain at least one of platinum group metals, platinum group metal oxides, platinum group metal hydroxides, and alloys containing a platinum group metal. Examples of a preferable combination of elements contained in the second layer include the combinations enumerated for the first layer. The combination of the first layer and the second layer may be a combination in which the compositions are the same and the composition ratios are different or may be a combination of different compositions.

As the thickness of the catalyst layer, the total thickness of the catalyst layer formed and the intermediate layer is preferably 0.01 μm to 20 μm. With a thickness of 0.01 μm or more, the catalyst layer can sufficiently serve as the catalyst.

With a thickness of 20 μm or less, it is possible to form a robust catalyst layer that is unlikely to fall off from the substrate. The thickness is more preferably 0.05 μm to 15 μm. The thickness is more preferably 0.1 μm to 10 μm. The thickness is further preferably 0.2 μm to 8 μm.

The thickness of the electrode for electrolysis, that is, the total thickness of the substrate for electrode for electrolysis and the catalyst layer is preferably 315 μm or less, more preferably 220 μm or less, further preferably 170 μm or less, further more preferably 150 μm or less, even further preferably 145 μm or less, still more preferably 140 μm or less, even still more preferably 138 μm or less, further still more preferably 135 μm or less in respect of the handling property of the electrode for electrolysis.

A thickness of 315 μm or less can provide a good handling property.

Further, from a similar viewpoint as above, the thickness is preferably 130 μm or less, more preferably less than 130 μm, further preferably 115 μm or less, further more preferably 65 μm or less.

The lower limit value is not particularly limited, but is preferably 1 μm or more, more preferably 5 μm or more for practical reasons, more preferably 20 μm or more. The thickness of the electrode can be determined by measurement with a digimatic thickness gauge (Mitutoyo Corporation, minimum scale 0.001 mm). The thickness of the substrate for electrode for electrolysis can be measured in the same manner as in the case of the electrode for electrolysis. The thickness of the catalyst layer can be determined by subtracting the thickness of the substrate for electrode for electrolysis from the thickness of the electrode for electrolysis.

(Method for producing electrode for electrolysis)

Next, one embodiment of the method for producing the electrode for electrolysis 101 will be described in detail.
In the present embodiment, the electrode for electrolysis 101 can be produced by forming the first layer 20, preferably the second layer 30, on the substrate for electrode for electrolysis by a method such as baking of a coating film under an oxygen atmosphere (pyrolysis), or ion plating, plating, or thermal spraying. The method for producing the electrode for electrolysis as mentioned can achieve a high productivity of the electrode for electrolysis 101. Specifically, a catalyst layer is formed on the substrate for electrode for electrolysis by an application step of applying a coating liquid containing a catalyst, a drying step of drying the coating liquid, and a pyrolysis step of performing pyrolysis. Pyrolysis herein means that a metal salt which is to be a precursor is decomposed by heating into a metal or metal oxide and a gaseous substance. The decomposition product depends on the metal species to be used, type of the salt, and the atmosphere under which pyrolysis is performed, and many metals tend to form oxides in an oxidizing atmosphere. In an industrial process of producing an electrode, pyrolysis is usually performed in air, and a metal oxide or a metal hydroxide is formed in many cases.

<Formation of first layer of anode>

[Application step]

The first layer 20 is obtained by applying a solution in which at least one metal salt of ruthenium, iridium, and titanium is dissolved (first coating liquid) onto the substrate for electrode for electrolysis and then pyrolyzing (baking) the coating liquid in the presence of oxygen. The content of ruthenium, iridium, and titanium in the first coating liquid is substantially equivalent to that of the first layer 20.
The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is not particularly limited, but is preferably in the range of 10 to 150 g/L in association with the thickness of the coating film to be formed by a single coating.
Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

[Drying step and pyrolysis step]

After being applied onto the substrate for electrode for electrolysis 101, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.
The cycle of application, drying, and pyrolysis described above is repeated to form a covering (the first layer 20) to a predetermined thickness. After the first layer 20 is formed and then further post-baked for a long period as required can further improve the stability of the first layer 20.

<Formation of second layer of anode>

The second layer 30, which is formed as required, is obtained, for example, by applying a solution containing a palladium compound and a platinum compound or a solution containing a ruthenium compound and a titanium compound (second coating liquid) onto the first layer 20 and then pyrolyzing the coating liquid in the presence of oxygen.

<Formation of first layer of cathode by pyrolysis method>

[Application step]

The first layer 20 is obtained by applying a solution in which metal salts of various combination are dissolved (first coating liquid) onto the substrate for electrode for electrolysis and then pyrolyzing (baking) the coating liquid in the presence of oxygen. The content of the metal in the first coating liquid is substantially equivalent to that in the first layer 20 after baking.

The metal salts may be chlorides, nitrates, sulfates, metal alkoxides, and any other forms. The solvent of the first coating liquid can be selected depending on the type of the metal salt, and water and alcohols such as butanol can be used. As the solvent, water or a mixed solvent of water and an alcohol is preferable. The total metal concentration in the first coating liquid in which the metal salts are dissolved is, but is not particularly limited to, preferably in the range of 10 to 150 g/L in association with the thickness of the coating film to be formed by a single coating.

Examples of a method used as the method for applying the first coating liquid onto the substrate for electrode for electrolysis 10 include a dipping method of immersing the substrate for electrode for electrolysis 10 in the first coating liquid, a method of brushing the first coating liquid, a roll method using a sponge roll impregnated with the first coating liquid, and an electrostatic coating method in which the substrate for electrode for electrolysis 10 and the first coating liquid are oppositely charged and spraying is performed. Among these, preferable is the roll method or electrostatic coating method, which has an excellent industrial productivity.

[Drying step and pyrolysis step]

After being applied onto the substrate for electrode for electrolysis 10, the first coating liquid is dried at a temperature of 10 to 90°C and pyrolyzed in a baking furnace heated to 350 to 650°C. Between the drying and pyrolysis, preliminary baking at 100 to 350°C may be performed as required. The drying, preliminary baking, and pyrolysis temperature can be appropriately selected depending on the composition and the solvent type of the first coating liquid. A longer time period of pyrolysis per step is preferable, but from the viewpoint of the productivity of the electrode, 3 to 60 minutes is preferable, 5 to 20 minutes is more preferable.

The cycle of application, drying, and pyrolysis described above is repeated to form a covering (the first layer 20) to a predetermined thickness. After the first layer 20 is formed and then further post-baked for a long period as required can further improve the stability of the first layer 20.

<Formation of intermediate layer>

The intermediate layer, which is formed as required, is obtained, for example, by applying a solution containing a palladium compound or platinum compound (second coating liquid) onto the substrate and then pyrolyzing the coating liquid in the presence of oxygen. Alternatively, a nickel oxide intermediate layer may be formed on the substrate surface only by heating the substrate, with no solution applied thereon.

<Formation of first layer of cathode by ion plating>

The first layer 20 can be formed also by ion plating.

An example includes a method in which the substrate is fixed in a chamber and the metal ruthenium target is irradiated with an electron beam. Evaporated metal ruthenium particles are positively charged in plasma in the chamber to deposit on the substrate negatively charged. The plasma atmosphere is argon and oxygen, and ruthenium deposits as ruthenium oxide on the substrate.

<Formation of first layer of cathode by plating>

The first layer 20 can be formed also by a plating method.

As an example, when the substrate is used as the cathode and subjected to electrolytic plating in an electrolyte solution containing nickel and tin, alloy plating of nickel and tin can be formed.

<Formation of first layer of cathode by thermal spraying>

The first layer 20 can be formed also by thermal spraying.

As an example, plasma spraying nickel oxide particles onto the substrate can form a catalyst layer in which metal nickel and nickel oxide are mixed.

<Formation of second layer of cathode>

The second layer 30, which is formed as required, is obtained, for example, by applying a solution containing an iridium compound, a palladium compound, and a platinum compound or a solution containing a ruthenium compound onto the first layer 20 and then pyrolyzing the coating liquid in the presence of oxygen.

The electrode for electrolysis can be integrated with a membrane such as an ion exchange membrane and a microporous membrane and used.

Thus, the electrode can be used as a membrane-integrated electrode. Then, the substituting work for the cathode and anode on renewing the electrode is eliminated, and the work efficiency is markedly improved.

The electrode integrated with the membrane such as an ion exchange membrane and a microporous membrane can make the electrolytic performance comparable to or higher than those of a new electrode.

(Membrane)

Suitable examples of the membrane for use in the laminate of the present embodiment include an ion exchange membrane and a microporous membrane.

Hereinafter, the ion exchange membrane will be described in detail.

<Ion exchange membrane>

The ion exchange membrane has a membrane body containing a hydrocarbon polymer or fluorine-containing polymer having an ion exchange group and a coating layer provided on at least one surface of the membrane body.

The coating layer contains inorganic material particles and a binder, and the specific surface area of the coating layer is 0.1 to 10 $m^2/g$. In the ion exchange membrane having such a structure, the influence of gas generated during electrolysis on electrolytic performance is small, and stable electrolytic performance can be exhibited.

The membrane having an ion exchange group described above includes either one of a sulfonic acid layer having an ion exchange group derived from a sulfo group (a group represented by $-SO_3^-$, hereinbelow also referred to as a "sulfonic acid group") or a carboxylic acid layer having an ion exchange group derived from a carboxyl group (a group represented by $-CO_2^-$, hereinbelow also referred to as a "carboxylic acid group"). From the viewpoint of strength and dimension stability, reinforcement core materials are preferably further included.

The inorganic material particles and binder will be described in detail in the section of description of the coating layer below.

Figure 2 illustrates a cross-sectional schematic view showing one embodiment of an ion exchange membrane.

An ion exchange membrane 1 has a membrane body 1a containing a hydrocarbon polymer or fluorine-containing polymer having an ion exchange group and coating layers 11a and 11b formed on both the surfaces of the membrane body 1a.

In the ion exchange membrane 1, the membrane body 1a comprises a sulfonic acid layer 3 having an ion exchange group derived from a sulfo group (a group represented by $-SO_3^-$, hereinbelow also referred to as a "sulfonic acid group") and a carboxylic acid layer 2 having an ion exchange group derived from a carboxyl group (a group represented by $-CO_2^-$, hereinbelow also referred to as a "carboxylic acid group"), and the reinforcement core materials 4 enhance the strength and dimension stability.

The ion exchange membrane 1, as comprising the sulfonic acid layer 3 and the carboxylic acid layer 2, is suitably used as an anion exchange membrane.

The ion exchange membrane may include either one of the sulfonic acid layer and the carboxylic acid layer. The ion exchange membrane may not be necessarily reinforced by reinforcement core materials, and the arrangement of the reinforcement core materials is not limited to the example in Figure 2.

<Membrane body>

First, the membrane body 1a constituting the ion exchange membrane 1 will be described.

The membrane body 1a should be one that has a function of selectively allowing cations to permeate and comprises a hydrocarbon polymer or a fluorine-containing polymer having an ion exchange group. Its configuration and material are not particularly limited, and preferred ones can be appropriately selected.

The hydrocarbon polymer or fluorine-containing polymer having an ion exchange group as the membrane body 1a can be obtained from a hydrocarbon polymer or fluorine-containing polymer having an ion exchange group precursor capable of forming an ion exchange group by hydrolysis or the like. Specifically, after a polymer comprising a main chain of a fluorinated hydrocarbon, having, as a pendant side chain, a group convertible into an ion exchange group by hydrolysis or the like (ion exchange group precursor), and being melt-processable (hereinbelow, referred to as the "fluorine-containing polymer (a)" in some cases) is used to prepare a precursor of the membrane body 1a, the membrane body 1a can be obtained by converting the ion exchange group precursor into an ion exchange group.

The fluorine-containing polymer (a) can be produced, for example, by copolymerizing at least one monomer selected from the following first group and at least one monomer selected from the following second group and/or the following third group. The fluorine-containing polymer (a) can be also produced by homopolymerization of one monomer selected from any of the following first group, the following second group, and the following third group.

Examples of the monomers of the first group include vinyl fluoride compounds. Examples of the vinyl fluoride compounds include vinyl fluoride, tetrafluoroethylene, hexafluoropropylene, vinylidene fluoride, trifluoroethylene, chlorotrifluoroethylene, and perfluoro alkyl vinyl ethers. Particularly when the ion exchange membrane is used as a membrane for alkali electrolysis, the vinyl fluoride compound is preferably a perfluoro monomer, and a perfluoro monomer selected from the group consisting of tetrafluoroethylene, hexafluoropropylene, and perfluoro alkyl vinyl ethers is preferable.

Examples of the monomers of the second group include vinyl compounds having a functional group convertible into a carboxylic acid-type ion exchange group (carboxylic acid group). Examples of the vinyl compounds having a functional group convertible into a carboxylic acid group include monomers represented by $CF_2=CF(OCF_2CYF)_s-O(CZF)_t-COOR$, wherein s represents an integer of 0 to 2, t represents an integer of 1 to 12, Y and Z each independently represent F or $CF_3$, and R represents a lower alkyl group (a lower alkyl group is an alkyl group having 1 to 3 carbon atoms, for example).

Among these, compounds represented by $CF_2=CF(OCF_2CYF)_n-O(CF_2)_m-COOR$ are preferable. Wherein n represents an integer of 0 to 2, m represents an integer of 1 to 4, Y represents F or $CF_3$, and R represents $CH_3$, $C_2H_5$, or $C_3H_7$.

When the ion exchange membrane is used as a cation exchange membrane for alkali electrolysis, a perfluoro compound is preferably at least used as the monomer, but the alkyl group (see the above R) of the ester group is lost from the polymer at the time of hydrolysis, and therefore the alkyl group (R) need not be a perfluoroalkyl group in which all hydrogen atoms are replaced by fluorine atoms.

Of the above monomers, the monomers represented below are more preferable as the monomers of the second group:

$CF_2=CFOCF_2-CF(CF_3)OCF_2COOCH_3$,
$CF_2=CFOCF_2CF(CF_3)O(CF_2)_2COOCH_3$,
$CF_2=CF[OCF_2-CF(CF_3)]_2O(CF_2)_2COOCH_3$,
$CF_2=CFOCF_2CF(CF_3)O(CF_2)_3COOCH_3$,
$CF_2=CFO(CF_2)_2COOCH_3$, and
$CF_2=CFO(CF_2)_3COOCH_3$.

Examples of the monomers of the third group include vinyl compounds having a functional group convertible into a sulfone-type ion exchange group (sulfonic acid group). As the vinyl compounds having a functional group convertible into a sulfonic acid group, for example, monomers represented by $CF_2=CFO-X-CF_2-SO_2F$ are preferable, wherein X represents a perfluoroalkylene group. Specific examples of these include the monomers represented below:

$CF_2=CFOCF_2CF_2SO_2F$,
$CF_2=CFOCF_2CF(CF_3)OCF_2CF_2SO_2F$,
$CF_2=CFOCF_2CF(CF_3)OCF_2CF_2CF_2SO_2F$,
$CF_2=CF(CF_2)_2SO_2F$,
$CF_2=CFO[CF_2CF(CF_3)O]_2CF_2CF_2SO_2F$, and
$CF_2=CFOCF_2CF(CF_2OCF_3)OCF_2CF_2SO_2F$.

Among these, $CF_2=CFOCF_2CF(CF_3)OCF_2CF_2CF_2SO_2F$ and $CF_2=CFOCF_2CF(CF_3)OCF_2CF_2SO_2F$ are more preferable.

The copolymer obtained from these monomers can be produced by a polymerization method developed for homopolymerization and copolymerization of ethylene fluoride, particularly a general polymerization method used for tetrafluoroethylene. For example, in a nonaqueous method, a polymerization reaction can be performed in the presence of a radical polymerization initiator such as a perfluorocarbon peroxide or an azo compound under the conditions of a temperature of 0 to 200°C and a pressure of 0.1 to 20 MPa using an inert solvent such as a perfluorohydrocarbon or a chlorofluorocarbon.

In the above copolymerization, the type of combination of the above monomers and their proportion are not particularly limited and are selected and determined depending on the type and amount of the functional group desired to be imparted to the fluorine-containing polymer to be obtained.

For example, when a fluorine-containing polymer containing only a carboxylic acid group is formed, at least one monomer should be selected from each of the first group and the second group described above and copolymerized. In addition, when a fluorine-containing polymer containing only a sulfonic acid group is formed, at least one monomer should be selected from each of the first group and the third group and copolymerized. Further, when a fluorine-containing polymer having a carboxylic acid group and a sulfonic acid group is formed, at least one monomer should be selected from each of the first group, the second group, and the third group described above and copolymerized. In this case, the target fluorine-containing polymer can be obtained also by separately preparing a copolymer comprising the monomers of the first group and the second group described above and a copolymer comprising the monomers of the first group and the third group described above, and then mixing the copolymers. The mixing proportion of the monomers is not particularly limited, and when the amount of the functional groups per unit polymer is increased, the proportion of the monomers selected from the second group and the third group described above should be increased.

The total ion exchange capacity of the fluorine-containing copolymer is not particularly limited, but is preferably 0.5 to 2.0 mg equivalent/g, more preferably 0.6 to 1.5 mg equivalent/g.

The total ion exchange capacity herein refers to the equivalent of the exchange group per unit mass of the dry resin and can be measured by neutralization titration or the like.

In the membrane body 1a of the ion exchange membrane 1, a sulfonic acid layer 3 containing a fluorine-containing polymer having a sulfonic acid group and a carboxylic acid layer 2 containing a fluorine-containing polymer having a carboxylic acid group are preferably laminated. By providing the membrane body 1a having such a layer configuration, selective permeability for cations such as sodium ions can be further improved.

The ion exchange membrane 1 is arranged in an electrolyzer such that, usually, the sulfonic acid layer 3 is located on the anode side of the electrolyzer and the carboxylic acid layer 2 is located on the cathode side of the electrolyzer.

The sulfonic acid layer 3 is preferably constituted by a material having low electrical resistance and has a membrane thickness larger than that of the carboxylic acid layer 2 from the viewpoint of membrane strength. The membrane thickness of the sulfonic acid layer 3 is preferably 2 to 25 times, more preferably 3 to 15 times that of the carboxylic acid layer 2.

The carboxylic acid layer 2 preferably has high anion exclusion properties even if it has a small membrane thickness. The anion exclusion properties here refer to the property of trying to hinder intrusion and permeation of anions into and through the ion exchange membrane 1. In order to raise the anion exclusion properties, it is effective to dispose a carboxylic acid layer having a small ion exchange capacity to the sulfonic acid layer.

As the fluorine-containing polymer for use in the sulfonic acid layer 3, preferable is a polymer obtained by using $CF_2=CFOCF_2CF(CF_3)OCF_2CF_2SO_2F$ as the monomer of the third group.

As the fluorine-containing polymer for use in the carboxylic acid layer 2, preferable is a polymer obtained by using $CF_2=CFOCF_2CF(CF_2)O(CF_2)_2COOCH_3$ as the monomer of the second group.

<Coating layer>

The ion exchange membrane has a coating layer on at least one surface of the membrane body. As shown in Figure 2, in the ion exchange membrane 1, coating layers 11a and 11b are formed on both the surfaces of the membrane body 1a.

The coating layers contain inorganic material particles and a binder.

The average particle size of the inorganic material particles is preferably 0.90 $\mu$m or more. When the average particle size of the inorganic material particles is 0.90 $\mu$m or more, durability to impurities is extremely improved, in addition to attachment of gas. That is, enlarging the average particle size of the inorganic material particles as well as satisfying the value of the specific surface area of the coating layer mentioned above can achieve a particularly marked effect. Irregular inorganic material particles are preferable because the average particle size and specific surface area as above are satisfied. Inorganic material particles obtained by melting and inorganic material particles obtained by grinding raw ore can be used. Inorganic material particles obtained by grinding raw ore can preferably be used.

The average particle size of the inorganic material particles is preferably 2 $\mu$m or less. When the average particle size of the inorganic material particles is 2 $\mu$m or less, it is possible to prevent damage of the membrane due to the inorganic material particles. The average particle size of the inorganic material particle is more preferably 0.90 to 1.2 $\mu$m.

Here, the average particle size can be measured by a particle size analyzer ("SALD2200", SHIMADZU CORPORATION).

The inorganic material particles preferably have irregular shapes. Such shapes improve resistance to impurities further. The inorganic material particles preferably have a broad particle size distribution.

The inorganic material particles preferably contain at least one inorganic material selected from the group consisting of oxides of Group IV elements in the Periodic Table, nitrides of Group IV elements in the Periodic Table, and carbides of Group IV elements in the Periodic Table. From the viewpoint of durability, zirconium oxide particle is more preferable.

The inorganic material particles are preferably inorganic material particles produced by grinding the raw ore of the inorganic material particles or inorganic material particles, as spherical particles having a uniform diameter, obtained by melt-purifying the raw ore of the inorganic material particles.

Examples of means for grinding raw ore include, but are not particularly limited to, ball mills, bead mills, colloid mills, conical mills, disc mills, edge mills, grain mills, hammer mills, pellet mills, VSI mills, Wiley mills, roller mills, and jet mills. After grinding, the particles are preferably washed. As the washing method, the particles are preferably treated with acid. This treatment can reduce impurities such as iron attached to the surface of the inorganic material particles.

The coating layer preferably contains a binder. The binder is a component that forms the coating layers by retaining the inorganic material particles on the surface of the ion exchange membrane. The binder preferably contains a fluorine-containing polymer from the viewpoint of durability to the electrolyte solution and products from electrolysis.

As the binder, a fluorine-containing polymer having a carboxylic acid group or sulfonic acid group is more preferable, from the viewpoint of durability to the electrolyte solution and products from electrolysis and adhesion to the surface of the ion exchange membrane. When a coating layer is provided on a layer containing a fluorine-containing polymer having a sulfonic acid group (sulfonic acid layer), a fluorine-containing polymer having a sulfonic acid group is further preferably used as the binder of the coating layer. Alternatively, when a coating layer is provided on a layer containing a fluorine-containing polymer having a carboxylic acid group (carboxylic acid layer), a fluorine-containing polymer having a carboxylic acid group is further preferably used as the binder of the coating layer.

In the coating layer, the content of the inorganic material particles is preferably 40 to 90% by mass, more preferably 50 to 90% by mass. The content of the binder is preferably 10 to 60% by mass, more preferably 10 to 50% by mass.

The distribution density of the coating layer in the ion exchange membrane is preferably 0.05 to 2 mg per 1 $cm^2$. When the ion exchange membrane has asperities on the surface thereof, the distribution density of the coating layer is preferably 0.5 to 2 mg per 1 $cm^2$.

As the method for forming the coating layer, which is not particularly limited, a known method can be used. An example is a method including applying by a spray or the like a coating liquid obtained by dispersing inorganic material particles in a solution containing a binder.

<Reinforcement core materials>

The ion exchange membrane preferably has reinforcement core materials arranged inside the membrane body.

The reinforcement core materials are members that enhance the strength and dimensional stability of the ion exchange membrane. By arranging the reinforcement core materials inside the membrane body, particularly expansion and contraction of the ion exchange membrane can be controlled in the desired range. Such an ion exchange membrane does not expand or contract more than necessary during electrolysis and the like and can maintain excellent dimensional stability for a long term.

The configuration of the reinforcement core materials is not particularly limited, and, for example, the reinforcement core materials may be formed by spinning yarns referred to as reinforcement yarns. The reinforcement yarns here refer to yarns that are members constituting the reinforcement core materials, can provide the desired dimensional stability and mechanical strength to the ion exchange membrane, and can be stably present in the ion exchange membrane. By using the reinforcement core materials obtained by spinning such reinforcement yarns, better dimensional stability and mechanical strength can be provided to the ion exchange membrane.

The material of the reinforcement core materials and the reinforcement yarns used for these is not particularly limited but is preferably a material resistant to acids, alkalis, etc., and a fiber comprising a fluorine-containing polymer is preferable because long-term heat resistance and chemical resistance are required.

Examples of the fluorine-containing polymer to be used in the reinforcement core materials include polytetrafluoroethylene (PTFE), tetrafluoroethylene-perfluoroalkyl vinyl ether copolymers (PFA), tetrafluoroethylene-ethylene copolymers (ETFE), tetrafluoroethylene-hexafluoropropylene copolymers, trifluorochloroethylene-ethylene copolymers, and vinylidene fluoride polymers (PVDF). Among these, fibers comprising polytetrafluoroethylene are preferably used from the viewpoint of heat resistance and chemical resistance.

The yarn diameter of the reinforcement yarns used for the reinforcement core materials is not particularly limited, but is preferably 20 to 300 deniers, more preferably 50 to 250 deniers. The weave density (fabric count per unit length) is preferably 5 to 50/inch. The form of the reinforcement core materials is not particularly limited, for example, a woven fabric, a nonwoven fabric, and a knitted fabric are used, but is preferably in the form of a woven fabric. The thickness of the woven fabric to be used is preferably 30 to 250 $\mu$m, more preferably 30 to 150 $\mu$m.

As the woven fabric or knitted fabric, monofilaments, multifilaments, or yarns thereof, a slit yarn, or the like can be used, and various types of weaving methods such as a plain weave, a leno weave, a knit weave, a cord weave, and a seersucker can be used.

The weave and arrangement of the reinforcement core materials in the membrane body are not particularly limited, and preferred arrangement can be appropriately provided considering the size and form of the ion exchange membrane, physical properties desired for the ion exchange membrane, the use environment, and the like.

For example, the reinforcement core materials may be arranged along one predetermined direction of the membrane body, but from the viewpoint of dimensional stability, it is preferred that the reinforcement core materials be arranged along a predetermined first direction, and other reinforcement core materials be arranged along a second direction substantially perpendicular to the first direction. By arranging the plurality of reinforcement core materials substantially orthogonally to the longitudinal direction inside the membrane body, it is possible to impart better dimensional stability and mechanical strength in many directions. For example, arrangement in which the reinforcement core materials arranged along the longitudinal direction (warp yarns) and the reinforcement core materials arranged along the transverse direction (weft yarns) are woven on the surface side of the membrane body is preferred. The arrangement is more preferably in the form of plain weave driven and woven by allowing warps and wefts to run over and under each other alternately, leno weave in which two warps are woven into wefts while twisted, basket weave driven and woven by inserting, into two or more parallelly-arranged warps, wefts of the same number, or the like, from the viewpoint of dimension stability, mechanical strength and easy-production.

It is preferred that particularly, the reinforcement core materials be arranged along both directions, the MD (Machine Direction) and TD (Transverse Direction) of the ion exchange membrane. In other words, the reinforcement core materials are preferably plain-woven in the MD and TD.

Here, the MD refers to the direction in which the membrane body and various core materials (for example, the reinforcement core materials, reinforcement yarns, and sacrifice yarns described later) are conveyed in an ion exchange membrane production step described later (flow direction), and the TD refers to the direction substantially perpendicular to the MD. Yarns woven along the MD are referred to as MD yarns, and yarns woven along the TD are referred to as TD yarns. Usually, the ion exchange membrane used for electrolysis is rectangular, and in many cases, the longitudinal direction is the MD, and the width direction is the TD. By weaving the reinforcement core materials that are MD yarns and the reinforcement core materials that are TD yarns, it is possible to impart better dimensional stability and mechanical strength in many directions.

The arrangement interval of the reinforcement core materials is not particularly limited, and preferred arrangement can be appropriately provided considering physical properties desired for the ion exchange membrane, the use environment, and the like.

The aperture ratio for the reinforcement core materials is not particularly limited, but is preferably 30% or more, more preferably 50% or more and 90% or less. The aperture ratio is preferably 30% or more from the viewpoint of the electrochemical properties of the ion exchange membrane, and preferably 90% or less from the viewpoint of the mechanical strength of the ion exchange membrane.

The aperture ratio for the reinforcement core materials herein refers to a ratio of a total area of a surface through which substances such as ions (an electrolyte solution and cations contained therein (e.g., sodium ions)) can pass (B) to the area of either one surface of the membrane body (A) (B/A). The total area of the surface through which substances such as ions can pass (B) can refer to the total areas of regions in which in the ion exchange membrane, cations, an electrolytic solution, and the like are not blocked by the reinforcement core materials and the like contained in the ion exchange membrane.

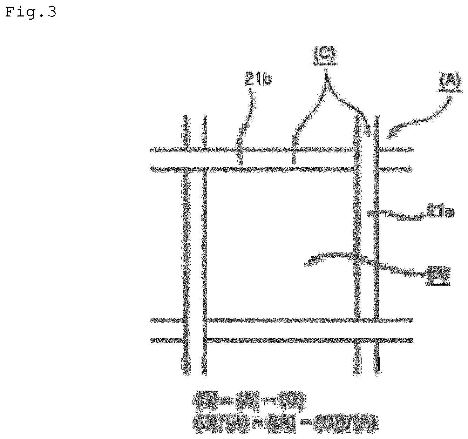

Figure 3 illustrates a schematic view for explaining the aperture ratio of reinforcement core materials constituting the ion exchange membrane.

Figure 3, in which a portion of the ion exchange membrane is enlarged, shows only the arrangement of the reinforcement core materials 21a and 21b in the regions, omitting illustration of the other members.

By subtracting the total area of the reinforcement core materials (C) from the area of the region surrounded by the reinforcement core materials 21a arranged along the longitudinal direction and the reinforcement core materials 21b arranged along the transverse direction, the region including the area of the reinforcement core materials (A), the total area of regions through which substances such as ions can pass (B) in the area of the above-described region (A) can be obtained. That is, the aperture ratio can be determined by the following formula (I) :

$$\texttt{Aperture ratio = (B)/(A) = ((A)-(C))/(A) ... (I)}$$

Among the reinforcement core materials, a particularly preferred form is tape yarns or highly oriented monofilaments comprising PTFE from the viewpoint of chemical resistance and heat resistance. Specifically, reinforcement core materials forming a plain weave in which 50 to 300 denier tape yarns obtained by slitting a high strength porous sheet comprising PTFE into a tape form, or 50 to 300 denier highly oriented monofilaments comprising PTFE are used and which has a weave density of 10 to 50 yarns or monofilaments/inch and has a thickness in the range of 50 to 100 μm are more preferred. The aperture ratio of an ion exchange membrane comprising such reinforcement core materials is further preferably 60% or more.

Examples of the shape of the reinforcement yarns include round yarns and tape yarns.

<Continuous holes>

The ion exchange membrane preferably has continuous holes inside the membrane body.

The continuous holes refer to holes that can be flow paths for ions generated in electrolysis and an electrolyte solution. The continuous holes, which are tubular holes formed inside the membrane body, are formed by dissolution of sacrifice core materials (or sacrifice yarns) described below. The shape, diameter, or the like of the continuous holes can be controlled by selecting the shape or diameter of the sacrifice core materials (sacrifice yarns).

Forming the continuous holes inside the ion exchange membrane can ensure the mobility of an electrolyte solution on electrolysis. The shape of the continuous holes is not particularly limited, but may be the shape of sacrifice core materials to be used for formation of the continuous holes in accordance with the production method described below.

The continuous holes are preferably formed so as to alternately pass on the anode side (sulfonic acid layer side) and the cathode side (carboxylic acid layer side) of the reinforcement core materials. With such a structure, in a portion in which continuous holes are formed on the cathode side of the reinforcement core materials, ions (e.g., sodium ions) transported through the electrolyte solution with which the continuous holes are filled can flow also on the cathode side of the reinforcement core materials. As a result, the flow of cations is not interrupted, and thus, it is possible to further reduce the electrical resistance of the ion exchange membrane.

The continuous holes may be formed along only one predetermined direction of the membrane body constituting the ion exchange membrane, but are preferably formed in both the longitudinal direction and the transverse direction of the membrane body from the viewpoint of exhibiting more stable electrolytic performance.

(Method for producing ion exchange membrane)

A suitable example of a method for producing an ion exchange membrane includes a method including the following steps (1) to (6):

Step (1): the step of producing a fluorine-containing polymer having an ion exchange group or an ion exchange group precursor capable of forming an ion exchange group by hydrolysis,

Step (2): the step of weaving at least a plurality of reinforcement core materials, as required, and sacrifice yarns having a property of dissolving in an acid or an alkali, and forming continuous holes, to obtain a reinforcing material in which the sacrifice yarns are arranged between the reinforcement core materials adjacent to each other,

Step (3): the step of forming into a film the above fluorine-containing polymer having an ion exchange group or an ion exchange group precursor capable of forming an ion exchange group by hydrolysis,

Step (4): the step of embedding the above reinforcing materials, as required, in the above film to obtain a membrane body inside which the reinforcing materials are arranged,

Step (5): the step of hydrolyzing the membrane body obtained in the step (4) (hydrolysis step), and

Step (6): the step of providing a coating layer on the membrane body obtained in the step (5) (application step) .

Hereinafter, each of the steps will be described in detail.

Step (1): Step of producing fluorine-containing polymer

In the step (1), raw material monomers described in the first group to the third group above are used to produce a fluorine-containing polymer. In order to control the ion exchange capacity of the fluorine-containing polymer, the mixture ratio of the raw material monomers should be adjusted in the production of the fluorine-containing polymer forming the layers.

Step (2): Step of producing reinforcing materials

The reinforcing material is a woven fabric obtained by weaving reinforcement yarns or the like. The reinforcing material is embedded in the membrane to thereby form reinforcement core materials. When an ion exchange membrane having continuous holes is formed, sacrifice yarns are additionally woven into the reinforcing material. The amount of the sacrifice yarns contained in this case is preferably 10 to 80% by mass, more preferably 30 to 70% by mass based on the entire reinforcing material. Weaving the sacrifice yarns can also prevent yarn slippage of the reinforcement core materials.

As the sacrifice yarns, which have solubility in the membrane production step or under an electrolysis environment, rayon, polyethylene terephthalate (PET), cellulose, polyamide, and the like are used. Monofilaments or multifilaments having a thickness of 20 to 50 deniers and comprising polyvinyl alcohol and the like are also preferred.

In the step (2), the aperture ratio, arrangement of the continuous holes, and the like can be controlled by adjusting the arrangement of the reinforcement core materials and the sacrifice yarns.

Step (3): Step of film formation

In the step (3), the fluorine-containing polymer obtained in the step (1) is formed into a film by using an extruder. The film may be a single-layer configuration, a two-layer configuration of a sulfonic acid layer and a carboxylic acid layer as mentioned above, or a multilayer configuration of three layers or more.

Examples of the film forming method include the following:

a method in which a fluorine-containing polymer having a carboxylic acid group and a fluorine-containing polymer having a sulfonic acid group are separately formed into films; and

a method in which fluorine-containing polymer having a carboxylic acid group and a fluorine-containing polymer having a sulfonic acid group are coextruded into a composite film.

The number of each film may be more than one. Coextrusion of different films is preferred because of its contribution to an increase in the adhesive strength in the interface.

Step (4): Step of obtaining membrane body

In the step (4), the reinforcing material obtained in the step (2) is embedded in the film obtained in the step (3) to provide a membrane body including the reinforcing material therein.

Preferable examples of the method for forming a membrane body include (i) a method in which a fluorine-containing polymer having a carboxylic acid group precursor (e.g., carboxylate functional group) (hereinafter, a layer comprising the same is referred to as the first layer) located on the cathode side and a fluorine-containing polymer having a sulfonic acid group precursor (e.g., sulfonyl fluoride functional group) (hereinafter, a layer comprising the same is referred to as the second layer) are formed into a film by a coextrusion method, and, by using a heat source and a vacuum source as required, a reinforcing material and the second layer/first layer composite film are laminated in this order on breathable heat-resistant release paper on a flat plate or drum having many pores on the surface thereof and integrated at a temperature at which each polymer melts while air among each of the layers was evacuated by reduced pressure; and (ii) a method in which, in addition to the second layer/first layer composite film, a fluorine-containing polymer having a sulfonic acid group precursor is singly formed into a film (the third layer) in advance, and, by using a heat source and a vacuum source as required, the third layer film, the reinforcement core materials, and the composite film comprising the second layer/first layer are laminated in this order on breathable heat-resistant release paper on a flat plate or drum having many pores on the surface thereof and integrated at a temperature at which each polymer melts while air among each of the layers was evacuated by reduced pressure.

Coextrusion of the first layer and the second layer herein contributes to an increase in the adhesive strength at the interface.

The method including integration under a reduced pressure is characterized by making the third layer on the reinforcing material thicker than that of a pressure-application press method. Further, since the reinforcing material is fixed on the inner surface of the membrane body, the method has a property of sufficiently retaining the mechanical strength of the ion exchange membrane.

The variations of lamination described here are exemplary, and coextrusion can be performed after a preferred lamination pattern (for example, the combination of layers) is appropriately selected considering the desired layer configuration of the membrane body and physical properties, and the like.

For the purpose of further improving the electric properties of the ion exchange membrane, it is also possible to additionally interpose a fourth layer comprising a fluorine-containing polymer having both a carboxylic acid group precursor and a sulfonic acid group precursor between the first layer and the second layer or to use a fourth layer comprising a fluorine-containing polymer having both a carboxylic acid group precursor and a sulfonic acid group precursor instead of the second layer.

The method for forming the fourth layer may be a method in which a fluorine-containing polymer having a carboxylic acid group precursor and a fluorine-containing polymer having a sulfonic acid group precursor are separately produced and then mixed or may be a method in which a monomer having a carboxylic acid group precursor and a monomer having a sulfonic acid group precursor are copolymerized.

When the fourth layer is used as a component of the ion exchange membrane, a coextruded film of the first layer and the fourth layer is formed, in addition to this, the third layer and the second layer are separately formed into films, and lamination may be performed by the method mentioned above. Alternatively, the three layers of the first layer/fourth layer/second layer may be simultaneously formed into a film by coextrusion.

In this case, the direction in which the extruded film flows is the MD. As mentioned above, it is possible to form a membrane body containing a fluorine-containing polymer having an ion exchange group on a reinforcing material.

Additionally, the ion exchange membrane preferably has protruded portions composed of the fluorine-containing polymer having a sulfonic acid group, that is, projections, on the surface side composed of the sulfonic acid layer. As a method for forming such projections, which is not particularly limited, a known method also can be employed including forming projections on a resin surface. A specific example of the method is a method of embossing the surface of the membrane body. For example, the above projections can be formed by using release paper embossed in advance when the composite film mentioned above, reinforcing material, and the like are integrated. In the case where projections are formed by embossing, the height and arrangement density of the projections can be controlled by controlling the emboss shape to be transferred (shape of the release paper).

(5) Hydrolysis step

In the step (5), a step of hydrolyzing the membrane body obtained in the step (4) to convert the ion exchange group precursor into an ion exchange group (hydrolysis step) is performed.

In the step (5), it is also possible to form dissolution holes in the membrane body by dissolving and removing the sacrifice yarns included in the membrane body with acid or alkali. The sacrifice yarns may remain in the continuous holes without being completely dissolved and removed. The sacrifice yarns remaining in the continuous holes may be dissolved and removed by the electrolyte solution when the ion exchange membrane is subjected to electrolysis.

The sacrifice yarn has solubility in acid or alkali in the step of producing an ion exchange membrane or under an electrolysis environment. The sacrifice yarns are eluted out to thereby form continuous holes at corresponding sites.

The step (5) can be performed by immersing the membrane body obtained in the step (4) in a hydrolysis solution containing acid or alkali. An example of the hydrolysis solution that can be used is a mixed solution containing KOH and dimethyl sulfoxide (DMSO).

The mixed solution preferably contains KOH of 2.5 to 4.0 N and DMSO of 25 to 35% by mass.

The temperature for hydrolysis is preferably 70 to 100°C. The higher the temperature, the larger can be the apparent thickness. The temperature is more preferably 75 to 100°C.

The time for hydrolysis is preferably 10 to 120 minutes. The longer the time, the larger can be the apparent thickness. The time is more preferably 20 to 120 minutes.

The step of forming continuous holes by eluting the sacrifice yarn will be now described in more detail.

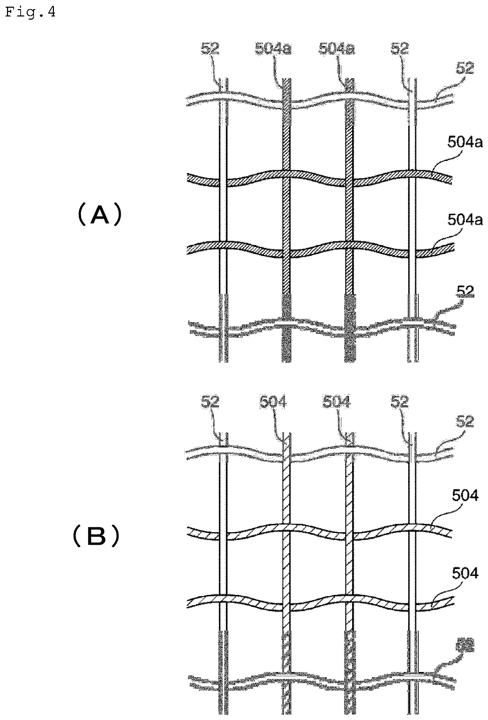

Figure 4(A) and Figure 4(B) are schematic views for explaining a method for forming the continuous holes of the ion exchange membrane.

Figure 4(A) and Figure 4(B) show reinforcement yarns 52, sacrifice yarns 504a, and continuous holes 504 formed by the sacrifice yarns 504a only, omitting illustration of the other members such as a membrane body.

First, the reinforcement yarns 52 that are to constitute reinforcement core materials in the ion exchange membrane and the sacrifice yarns 504a for forming the continuous holes 504 in the ion exchange membrane are used as interwoven reinforcing materials. Then, in the step (5), the sacrifice yarns 504a are eluted to form the continuous holes 504.

The above method is simple because the method for interweaving the reinforcement yarns 52 and the sacrifice yarns 504a may be adjusted depending on the arrangement of the reinforcement core materials and continuous holes in the membrane body of the ion exchange membrane.

Figure 4(A) exemplifies the plain-woven reinforcing material in which the reinforcement yarns 52 and sacrifice yarns 504a are interwoven along both the longitudinal direction and the lateral direction in the paper, and the arrangement of the reinforcement yarns 52 and the sacrifice yarns 504a in the reinforcing material may be varied as required.

(6) Application step

In the step (6), a coating layer can be formed by preparing a coating liquid containing inorganic material particles obtained by grinding raw ore or melting raw ore and a binder, applying the coating liquid onto the surface of the ion exchange membrane obtained in the step (5), and drying the coating liquid.

A preferable binder is a binder obtained by hydrolyzing a fluorine-containing polymer having an ion exchange group precursor with an aqueous solution containing dimethyl sulfoxide (DMSO) and potassium hydroxide (KOH) and then immersing the polymer in hydrochloric acid to replace the counterion of the ion exchange group by $H^+$ (e.g., a fluorine-containing polymer having a carboxyl group or sulfo group). Thereby, the polymer is more likely to dissolve in water or ethanol mentioned below, which is preferable.

This binder is dissolved in a mixed solution of water and ethanol. The volume ratio between water and ethanol is preferably 10:1 to 1:10, more preferably 5:1 to 1:5, further preferably 2:1 to 1:2. The inorganic material particles are dispersed with a ball mill into the dissolution liquid thus obtained to thereby provide a coating liquid. In this case, it is also possible to adjust the average particle size and the like of the particles by adjusting the time and rotation speed during the dispersion. The preferable amount of the inorganic material particles and the binder to be blended is as mentioned above.

The concentration of the inorganic material particles and the binder in the coating liquid is not particularly limited, but a thin coating liquid is preferable. This enables uniform application onto the surface of the ion exchange membrane.

Additionally, a surfactant may be added to the dispersion when the inorganic material particles are dispersed. As the surfactant, nonionic surfactants are preferable, and examples thereof include HS-210, NS-210, P-210, and E-212 manufactured by NOF CORPORATION.

The coating liquid obtained is applied onto the surface of the ion exchange membrane by spray application or roll coating to thereby provide an ion exchange membrane.

<Microporous membrane>

Suitable examples of the membrane constituting the laminate of the present embodiment also include a microporous membrane.

The microporous membrane is not particularly limited as long as the membrane can be formed into a laminate with the electrode for electrolysis, as mentioned above. Various microporous membranes may be employed.

The porosity of the microporous membrane is not particularly limited, but can be 20 to 90, for example, and is preferably 30 to 85. The above porosity can be calculated by the following formula:

$$\text{Porosity} = (1 - (\text{the weight of the membrane in a dried state}) \, / \, (\text{the weight calculated from the volume calculated from the thickness, width, and length of the membrane and the density of the membrane material})) \times 100$$

The average pore size of the microporous membrane is not particularly limited, and can be 0.01 $\mu$m to 10 $\mu$m, for example, preferably 0.05 $\mu$m to 5 $\mu$m. With respect to the average pore size, for example, the membrane is cut vertically to the thickness direction, and the section is observed with an FE-SEM. The average pore size can be obtained by measuring the diameter of about 100 pores observed and averaging the measurements.

The thickness of the microporous membrane is not particularly limited, and can be 10 $\mu$m to 1000 $\mu$m, for example, preferably 50 $\mu$m to 600 $\mu$m. The above thickness can be measured by using a micrometer (manufactured by Mitutoyo Corporation) or the like, for example.

Specific examples of the microporous membrane as mentioned above include Zirfon Perl UTP 500 manufactured by Agfa (also referred to as a Zirfon membrane in the present embodiment) and those described in International Publication No. WO 2013-183584 and International Publication No. WO 2016-203701.

The reason why the laminate of the present embodiment exhibits excellent electrolytic performance is presumed as follows.

When the membrane and the electrode for electrolysis firmly adhere to each other by a method such as thermal compression, which is a conventional technique, the electrode for electrolysis sinks into the membrane to thereby physically adhere thereto. This adhesion portion inhibits sodium ions from migrating in the membrane to thereby markedly raise the voltage.

Meanwhile, inhibition of migration of sodium ions in the membrane, which has been a problem in the conventional art, is eliminated by allowing the electrode for electrolysis to abut with a moderate adhesive force on the membrane or feed conductor, as in the present embodiment.

According to the foregoing, when the membrane or feed conductor abuts on the electrode for electrolysis with a moderate adhesive force, the membrane or feed conductor and the electrode for electrolysis, despite of being an integrated piece, can develop excellent electrolytic performance.

Particularly, in the laminate of the first embodiment of the present invention, when the laminate is wetted with a 3 mol/L NaCl aqueous solution and stored for 96 hours under storage conditions at ordinary temperature, the amount of the transition metal component(s) (with the proviso that zirconium is excluded) detected from the membrane is identified to be 100 cps or less. Thus, the ion exchange performance of the membrane can be practically sufficiently maintained, and the excellent electrolytic performance can be maintained for a long period.

[Electrolyzer]

The laminate of the present embodiment is assembled in an electrolyzer.

Hereinafter, the case of performing common salt electrolysis by using an ion exchange membrane as the membrane is taken as an example, and one embodiment of the electrolyzer will be described in detail.

The electrolyzer of the present embodiment is not limited to a case of conducting common salt electrolysis and also can be used in water electrolysis, fuel cells, and the like.

[Electrolytic cell]

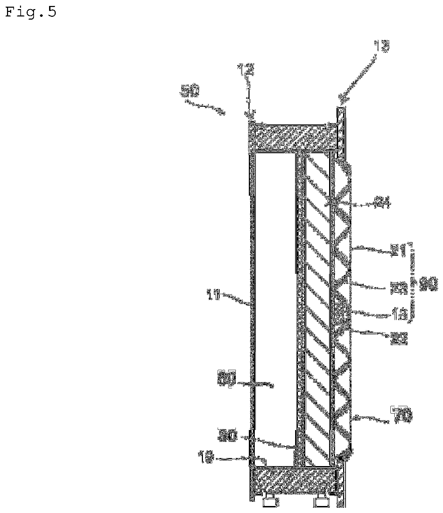

Figure 5 illustrates a cross-sectional view of an electrolytic cell 50.

The electrolytic cell 50 comprises an anode chamber 60, a cathode chamber 70, a partition wall 80 placed between the anode chamber 60 and the cathode chamber 70, an anode 11 placed in the anode chamber 60, and a cathode 21 placed in the cathode chamber 70.

As required, as shown in Figure 9, the electrolytic cell 50 has a substrate 18a and a reverse current absorbing layer 18b formed on the substrate 18a and may comprise a reverse current absorber 18 placed in the cathode chamber.

The anode 11 and the cathode 21 belonging to the electrolytic cell 50 are electrically connected to each other. In other words, the electrolytic cell 50 comprises the following cathode structure.

The cathode structure 90 comprises the cathode chamber 70, the cathode 21 placed in the cathode chamber 70, and the reverse current absorber 18 placed in the cathode chamber 70, the reverse current absorber 18 has the substrate 18a and the reverse current absorbing layer 18b formed on the substrate 18a, as shown in Figure 9, and the cathode 21 and the reverse current absorbing layer 18b are electrically connected.

The cathode chamber 70 further has a collector 23, a support 24 supporting the collector, and a metal elastic body 22.

The metal elastic body 22 is placed between the collector 23 and the cathode 21.

The support 24 is placed between the collector 23 and the partition wall 80.

The collector 23 is electrically connected to the cathode 21 via the metal elastic body 22.

The partition wall 80 is electrically connected to the collector 23 via the support 24. Accordingly, the partition wall 80, the support 24, the collector 23, the metal elastic body 22, and the cathode 21 are electrically connected.

The cathode 21 and the reverse current absorbing layer 18b are electrically connected.

The cathode 21 and the reverse current absorbing layer 18b may be directly connected or may be indirectly connected via the collector, the support, the metal elastic body, the partition wall, or the like.

The entire surface of the cathode 21 is preferably covered with a catalyst layer for reduction reaction.

The form of electrical connection may be a form in which the partition wall 80 and the support 24, the support 24 and the collector 23, and the collector 23 and the metal elastic body 22 are each directly attached and the cathode 21 is laminated on the metal elastic body 22. Examples of a method for directly attaching these constituent members to one another include welding and the like. Alternatively, the reverse current absorber 18, the cathode 21, and the collector 23 may be collectively referred to as a cathode structure 90.

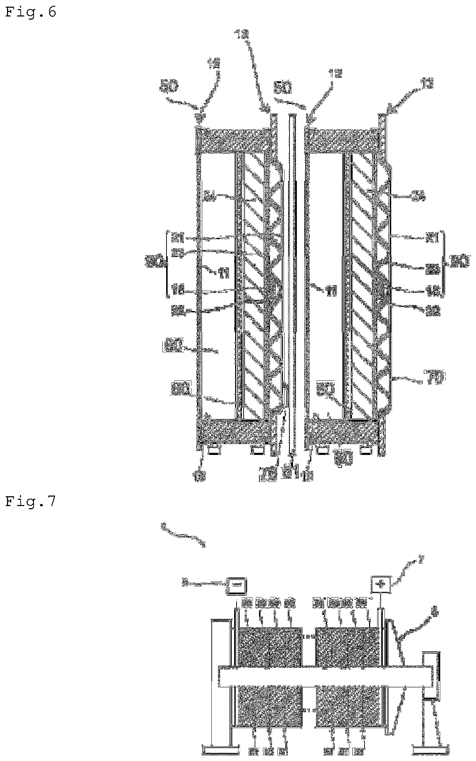

Figure 6 illustrates a cross-sectional view of two electrolytic cells 50 that are adjacent in the electrolyzer 4.

Figure 7 shows an electrolyzer 4.

Figure 8 shows a step of assembling the electrolyzer 4.

As shown in Figure 6, an electrolytic cell 50, a cation exchange membrane 51, and an electrolytic cell 50 are arranged in series in the order mentioned.

An ion exchange membrane 51 as a membrane is arranged between the anode chamber of one electrolytic cell 50 of the two electrolytic cells that are adjacent in the electrolyzer 4 and the cathode chamber of the other electrolytic cell 50.

That is, the anode chamber 60 of the electrolytic cell 50 and the cathode chamber 70 of the electrolytic cell 50 adjacent thereto is separated by the cation exchange membrane 51.

As shown in Figure 7, the electrolyzer 4 is composed of a plurality of electrolytic cells 50 connected in series via the ion exchange membrane 51.

That is, the electrolyzer 4 is a bipolar electrolyzer comprising the plurality of electrolytic cells 50 arranged in series and ion exchange membranes 51 each arranged between adjacent electrolytic cells 50.

As shown in Figure 8, the electrolyzer 4 is assembled by arranging the plurality of electrolytic cells 50 in series via the ion exchange membrane 51 and coupling the cells by means of a press device 5.

The electrolyzer 4 has an anode terminal 7 and a cathode terminal 6 to be connected to a power supply.

The anode 11 of the electrolytic cell 50 located at farthest end among the plurality of electrolytic cells 50 coupled in series in the electrolyzer 4 is electrically connected to the anode terminal 7.

The cathode 21 of the electrolytic cell located at the end opposite to the anode terminal 7 among the plurality of electrolytic cells 50 coupled in series in the electrolyzer 4 is electrically connected to the cathode terminal 6.

The electric current during electrolysis flows from the side of the anode terminal 7, through the anode and cathode of each electrolytic cell 50, toward the cathode terminal 6. At the both ends of the coupled electrolytic cells 50, an electrolytic cell having an anode chamber only (anode terminal cell) and an electrolytic cell having a cathode chamber only (cathode terminal cell) may be arranged. In this case, the anode terminal 7 is connected to the anode terminal cell arranged at the one end, and the cathode terminal 6 is connected to the cathode terminal cell arranged at the other end.

In the case of electrolyzing brine, brine is supplied to each anode chamber 60, and pure water or a low-concentration sodium hydroxide aqueous solution is supplied to each cathode chamber 70.

Each liquid is supplied from an electrolyte solution supply pipe (not shown in Figure), through an electrolyte solution supply hose (not shown in Figure), to each electrolytic cell 50.

The electrolyte solution and products from electrolysis are recovered from an electrolyte solution recovery pipe (not shown in Figure).

During electrolysis, sodium ions in the brine migrate from the anode chamber 60 of the one electrolytic cell 50, through the ion exchange membrane 51, to the cathode chamber 70 of the adjacent electrolytic cell 50. Thus, the electric current during electrolysis flows in the direction in which the electrolytic cells 50 are coupled in series.

That is, the electric current flows, through the cation exchange membrane 51, from the anode chamber 60 toward the cathode chamber 70.

As the brine is electrolyzed, chlorine gas is generated on the side of the anode 11, and sodium hydroxide (solute) and hydrogen gas are generated on the side of the cathode 21.

(Anode chamber)

The anode chamber 60 has the anode 11 or anode feed conductor 11.

When the electrode for electrolysis of the present embodiment is inserted to the anode side by renewing the laminate of the present embodiment as an integrated body, 11 serves as an anode feed conductor.

When the laminate of the present embodiment is not renewed as an integrated body, that is, the electrode for electrolysis of the present embodiment is not inserted to the anode side, 11 serves as the anode. The anode chamber 60 has an anode-side electrolyte solution supply unit that supplies an electrolyte solution to the anode chamber 60, a baffle plate that is arranged above the anode-side electrolyte solution supply unit so as to be substantially parallel or oblique to the partition wall 80, and an anode-side gas liquid separation unit arranged above the baffle plate to separate gas from the electrolyte solution including the gas mixed.

(Anode)

When the laminate of the present embodiment is not renewed as an integrated body, that is, the electrode for electrolysis of the present embodiment is not inserted to the anode side, the anode 11 is provided in the frame of the anode chamber 60.

As the anode 11, a metal electrode such as so-called DSA(R) can be used.

DSA is an electrode including a titanium substrate of which surface is covered with an oxide comprising ruthenium, iridium, and titanium as components.

As the form, any of a perforated metal, nonwoven fabric, foamed metal, expanded metal, metal porous foil formed by electroforming, so-called woven mesh produced by knitting metal lines, and the like can be used.

(Anode feed conductor)

When the electrode for electrolysis of the present embodiment is inserted to the anode side by renewing the laminate of the present embodiment as an integrated body, the anode feed conductor 11 is provided in the frame of the anode chamber 60.

As the anode feed conductor 11, a metal electrode such as so-called DSA(R) can be used, and titanium having no catalyst coating can be also used. Alternatively, DSA having a thinner catalyst coating can be also used. Further, a used anode can be also used.

As the form, any of a perforated metal, nonwoven fabric, foamed metal, expanded metal, metal porous foil formed by electroforming, so-called woven mesh produced by knitting metal lines, and the like can be used.

(Anode-side electrolyte solution supply unit)

The anode-side electrolyte solution supply unit, which supplies the electrolyte solution to the anode chamber 60, is connected to the electrolyte solution supply pipe.

The anode-side electrolyte solution supply unit is preferably arranged below the anode chamber 60.

As the anode-side electrolyte solution supply unit, for example, a pipe on the surface of which aperture portions are formed (dispersion pipe) and the like can be used. Such a pipe is more preferably arranged along the surface of the anode 11 and parallel to the bottom 19 of the electrolytic cell. This pipe is connected to an electrolyte solution supply pipe (liquid supply nozzle) that supplies the electrolyte solution into the electrolytic cell 50. The electrolyte solution supplied from the liquid supply nozzle is conveyed with a pipe into the electrolytic cell 50 and supplied from the aperture portions provided on the surface of the pipe to inside the anode chamber 60. Arranging the pipe along the surface of the anode 11 and parallel to the bottom 19 of the electrolytic cell is preferable because the electrolyte solution can be uniformly supplied to inside the anode chamber 60.

(Anode-side gas liquid separation unit)

The anode-side gas liquid separation unit is preferably arranged above the baffle plate. The anode-side gas liquid separation unit has a function of separating produced gas such as chlorine gas from the electrolyte solution during electrolysis. Unless otherwise specified, above means the upper direction in the electrolytic cell 50 in Figure 5, and below means the lower direction in the electrolytic cell 50 in Figure 5.

During electrolysis, produced gas generated in the electrolytic cell 50 and the electrolyte solution form a mixed phase (gas-liquid mixed phase), which is then emitted out of the system. Subsequently, pressure fluctuations inside the electrolytic cell 50 cause vibration, which may result in physical damage of the ion exchange membrane. In order to prevent this event, the electrolytic cell 50 is preferably provided with an anode-side gas liquid separation unit to separate the gas from the liquid. The anode-side gas liquid separation unit is preferably provided with a defoaming plate to eliminate bubbles. When the gas-liquid mixed phase flow passes through the defoaming plate, bubbles burst to thereby enable the electrolyte solution and the gas to be separated. As a result, vibration during electrolysis can be prevented.

(Baffle plate)

The baffle plate is preferably arranged above the anode-side electrolyte solution supply unit and arranged substantially in parallel with or obliquely to the partition wall 80.

The baffle plate is a partition plate that controls the flow of the electrolyte solution in the anode chamber 60.

When the baffle plate is provided, it is possible to cause the electrolyte solution (brine or the like) to circulate internally in the anode chamber 60 to thereby make the concentration uniform.

In order to cause internal circulation, the baffle plate is preferably arranged so as to separate the space in proximity to the anode 11 from the space in proximity to the partition wall 80. From such a viewpoint, the baffle plate is preferably placed so as to be opposed to the surface of the anode 11 and to the surface of the partition wall 80. In the space in proximity to the anode partitioned by the baffle plate, as electrolysis proceeds, the electrolyte solution concentration (brine concentration) is lowered, and produced gas such as chlorine gas is generated. This results in a difference in the gas-liquid specific gravity between the space in proximity to anode 11 and the space in proximity to the partition wall 80 partitioned by the baffle plate. By use of the difference, it is possible to promote the internal circulation of the electrolyte solution in the anode chamber 60 to thereby make the concentration distribution of the electrolyte solution in the anode chamber 60 more uniform.

Although not shown in Figure 5, a collector may be additionally provided inside the anode chamber 60.

The material and configuration of such a collector may be the same as those of the collector of the cathode chamber mentioned below. In the anode chamber 60, the anode 11 per se may also serve as the collector.

(Partition wall)

The partition wall 80 is arranged between the anode chamber 60 and the cathode chamber 70.

The partition wall 80 may be referred to as a separator, and the anode chamber 60 and the cathode chamber 70 are partitioned by the partition wall 80.

As the partition wall 80, one known as a separator for electrolysis can be used, and an example thereof includes a partition wall formed by welding a plate comprising nickel to the cathode side and a plate comprising titanium to the anode side.

(Cathode chamber)

In the cathode chamber 70, when the electrode for electrolysis of the present embodiment is inserted to the cathode side by renewing the laminate of the present embodiment as an integrated body, 21 serves as a cathode feed conductor. When the electrode for electrolysis is not inserted to the cathode side, 21 serves as a cathode.

When a reverse current absorber 18 is included, the cathode or cathode feed conductor 21 is electrically connected to the reverse current absorber 18.

The cathode chamber 70, similarly to the anode chamber 60, preferably has a cathode-side electrolyte solution supply unit and a cathode-side gas liquid separation unit.

Among the components constituting the cathode chamber 70, components similar to those constituting the anode chamber 60 will be not described.

(Cathode)

When the laminate of the present embodiment is not renewed as an integrated body, that is, the electrode for electrolysis of the present embodiment is not inserted to the cathode side, the cathode 21 is provided in the frame of the cathode chamber 70.

The cathode 21 preferably has a nickel substrate and a catalyst layer that covers the nickel substrate. Examples of the components of the catalyst layer on the nickel substrate include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. The cathode 21 may be subjected to a reduction treatment, as required. As the substrate of the cathode 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

(Cathode feed conductor)

When the electrode for electrolysis of the present embodiment is inserted to the cathode side by renewing the laminate of the present embodiment as an integrated body, the cathode feed conductor 21 is provided in the frame of the cathode chamber 70.

The cathode feed conductor 21 may be covered with a catalytic component.

The catalytic component may be a component that is originally used as the cathode and remains. Examples of the components of the catalyst layer include metals such as Ru, C, Si, P, S, Al, Ti, V, Cr, Mn, Fe, Co, Ni, Cu, Zn, Y, Zr, Nb, Mo, Rh, Pd, Ag, Cd, In, Sn, Ta, W, Re, Os, Ir, Pt, Au, Hg, Pb, Bi, La, Ce, Pr, Nd, Pm, Sm, Eu, Gd, Tb, Dy, Ho, Er, Tm, Yb, and Lu, and oxides and hydroxides of the metals.

Examples of the method for forming the catalyst layer include plating, alloy plating, dispersion/composite plating, CVD, PVD, pyrolysis, and spraying. These methods may be used in combination. The catalyst layer may have a plurality of layers and a plurality of elements, as required. Nickel, nickel alloys, and nickel-plated iron or stainless, having no catalyst coating may be used. As the substrate of the cathode feed conductor 21, nickel, nickel alloys, and nickel-plated iron or stainless may be used.

As the form, any of a perforated metal, nonwoven fabric, foamed metal, expanded metal, metal porous foil formed by electroforming, so-called woven mesh produced by knitting metal lines, and the like can be used.

(Reverse current absorbing layer)

A material having a redox potential less noble than the redox potential of the element for the catalyst layer of the cathode mentioned above may be selected as a material for the reverse current absorbing layer. Examples thereof include nickel and iron.

(Collector)

The cathode chamber 70 preferably comprises the collector 23.

The collector 23 improves current collection efficiency. In the present embodiment, the collector 23 is a porous plate and is preferably arranged in substantially parallel to the surface of the cathode 21.

The collector 23 preferably comprises an electrically conductive metal such as nickel, iron, copper, silver, and titanium. The collector 23 may be a mixture, alloy, or composite oxide of these metals. The collector 23 may have any form as long as the form enables the function of the collector and may have a plate or net form.

(Metal elastic body)

Placing the metal elastic body 22 between the collector 23 and the cathode 21 presses each cathode 21 of the plurality of electrolytic cells 50 connected in series onto the ion exchange membrane 51 to reduce the distance between each anode 11 and each cathode 21. Then, it is possible to lower the voltage to be applied entirely across the plurality of electrolytic cells 50 connected in series.

Lowering of the voltage enables the power consumption to be reduced.

With the metal elastic body 22 placed, the pressing pressure caused by the metal elastic body 22 enables the electrode for electrolysis to be stably maintained in place when the laminate including the electrode for electrolysis is placed in the electrolytic cell 50.

As the metal elastic body 22, spring members such as spiral springs and coils and cushioning mats may be used. As the metal elastic body 22, a suitable one may be appropriately employed, in consideration of a stress to press the ion exchange membrane 51 and the like. The metal elastic body 22 may be provided on the surface of the collector 23 on the side of the cathode chamber 70 or may be provided on the surface of the partition wall on the side of the anode chamber 60.

Both the chambers are usually partitioned such that the cathode chamber 70 becomes smaller than the anode chamber 60. Thus, from the viewpoint of the strength of the frame and the like, the metal elastic body 22 is preferably provided between the collector 23 and the cathode 21 in the cathode chamber 70.

The metal elastic body 22 preferably comprises an electrically conductive metal such as nickel, iron, copper, silver, and titanium.

(Support)

The cathode chamber 70 preferably comprises the support 24 that electrically connects the collector 23 to the partition wall 80. This can achieve an efficient current flow.

The support 24 preferably comprises an electrically conductive metal such as nickel, iron, copper, silver, and titanium.

The support 24 may have any shape as long as the support can support the collector 23 and may have a rod, plate, or net shape. The support 24 has a plate shape, for example.

A plurality of supports 24 are arranged between the partition wall 80 and the collector 23. The plurality of supports 24 are aligned such that the surfaces thereof are in parallel to each other. The supports 24 are arranged substantially perpendicular to the partition wall 80 and the collector 23.

(Anode side gasket and cathode side gasket)

The anode side gasket 12 is arranged on the frame surface constituting the anode chamber 60, that is, on the anode frame.

The cathode side gasket 13 is arranged on the frame surface constituting the cathode chamber 70, that is, on the cathode frame.

Electrolytic cells are connected to each other such that the anode side gasket 12 included in one electrolytic cell 50 and the cathode side gasket 13 of an electrolytic cell adjacent to the cell sandwich the membrane, that is, the ion exchange membrane 51 (see Figures 5 and 6).

These gaskets can impart airtightness to connecting points when the plurality of electrolytic cells 50 is connected in series via the ion exchange membrane 51.

The gaskets form a seal between the ion exchange membrane and electrolytic cells. Specific examples of the gaskets include picture frame-like rubber sheets at the center of which an aperture portion is formed. The gaskets are required to have resistance against corrosive electrolyte solutions or produced gas and be usable for a long period. Thus, in respect of chemical resistance and hardness, vulcanized products and peroxide-crosslinked products of ethylene-propylene-diene rubber (EPDM rubber) and ethylene-propylene rubber (EPM rubber) are usually used as the gaskets. Alternatively, gaskets of which region to be in contact with liquid (liquid contact portion) is covered with a fluorine-containing resin such as polytetrafluoroethylene (PTFE) and tetrafluoroethylene-perfluoroalkyl vinyl ether copolymers (PFA) may be employed as required.

These gaskets each may have an aperture portion so as not to inhibit the flow of the electrolyte solution, and the shape of the aperture portion is not particularly limited. For example, a picture frame-like gasket is attached with an adhesive or the like along the peripheral edge of each aperture portion of the anode chamber frame constituting the anode chamber 60 or the cathode chamber frame constituting the cathode chamber 70. Then, for example, in the case where the two electrolytic cells 50 are connected via the ion exchange membrane 51 (see Figure 6), each electrolytic cell 50 onto which the gasket is attached should be tightened via ion exchange membrane 51. This tightening can prevent the electrolyte solution, alkali metal hydroxide, chlorine gas, hydrogen gas, and the like generated from electrolysis from leaking out of the electrolytic cells 50.

(Ion exchange membrane)

The ion exchange membrane 51 is as described in the section of the ion exchange membrane described above.

(Water electrolysis)

The electrolyzer mentioned above, as an electrolyzer in the case of electrolyzing water, has a configuration in which the ion exchange membrane in an electrolyzer for use in the case of electrolyzing common salt mentioned above is replaced by a microporous membrane. The raw material to be supplied, which is water, is different from that for the electrolyzer in the case of electrolyzing common salt mentioned above. As for the other components, components similar to that of the electrolyzer in the case of electrolyzing common salt can be employed also in the electrolyzer in the case of electrolyzing water.

Since chlorine gas is generated in the anode chamber in the case of common salt electrolysis, titanium is used as the material of the anode chamber, but in the case of water electrolysis, only oxygen gas is generated in the anode chamber. Thus, a material identical to that of the cathode chamber can be used. An example thereof is nickel. For anode coating, catalyst coating for oxygen generation is suitable. Examples of the catalyst coating include metals, oxides, and hydroxides of the platinum group metals and transition metal group metals. For example, elements such as platinum, iridium, palladium, ruthenium, nickel, cobalt, and iron can be used.

(Application of laminate and protective laminate)

The laminate of the present embodiment can improve the work efficiency during electrode renewing in an electrolyzer and further, can exhibit excellent electrolytic performance also after renewing as mentioned above. In other words, the laminate and protective laminate of the present embodiment can be suitably used as a laminate for replacement of a member of an electrolyzer. A laminate to be used in such an application is specifically referred to as a "membrane electrode assembly".

(Package)

The laminate and protective laminate of the present embodiment (hereinafter, simply described as the laminate) are preferably transported or the like in a state of a package enclosed in a packaging material.

That is, the package comprises the laminate of the present embodiment and a packaging material that packages the laminate.

The package, configured as described above, can prevent adhesion of stain and damage that may occur during transport or the like of the laminate of the present embodiment. When used for member replacement of the electrolyzer, the laminate is particularly preferably transported or the like as the package.

As the packaging material, which is not particularly limited, known various packaging materials can be employed.

Alternatively, the package can be produced by, for example, a method including packaging the laminate of the present embodiment with a clean packaging material followed by encapsulation or the like, although not limited thereto.

Examples

The present invention will be described in further detail with reference to Examples and Comparative Examples below, but the present invention is not limited to Examples and Comparative Examples below in any way.

[Examples and Comparative Examples of laminate of first embodiment]

[Membrane and electrode for electrolysis constituting laminate of first embodiment]

(Membrane)

As the membrane for use in production of the laminate, an ion exchange membrane A produced as described below was used.

As reinforcement core materials, 90 denier monofilaments made of polytetrafluoroethylene (PTFE) were used (hereinafter referred to as PTFE yarns). As the sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a reinforcing material as a woven fabric having a thickness of 70 μm.

Next, a resin A of a dry resin that is a copolymer of $CF_2=CF_2$ and $CF_2=CFOCF_2CF(CF_3)OCF_2CF_2COOCH_3$ and has an ion exchange capacity of 0.85 mg equivalent/g, and a resin B of a dry resin that is a copolymer of $CF_2=CF_2$ and $CF_2=CFOCF_2CF(CF_3)OCF_2CF_2SO_2F$ and has an ion exchange capacity of 1.03 mg equivalent/g were provided.

Using these resins A and B, a two-layer film X in which the thickness of a resin A layer is 15 μm and the thickness of a resin B layer was 84 μm is obtained by a coextrusion T die method. Using only the resin B, a single-layer film Y having a thickness of 20 μm was obtained by a T die method.

Subsequently, release paper (embossed in a conical shape having a height of 50 μm), the film Y, a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane. The film X was laminated such that the resin B was positioned as the lower surface.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for 1 hour to replace the counterion of the ion exchange group by Na, and then washed with water. Thereafter, the surface on the side of the resin B was polished with a relative speed between a polishing roll and the membrane set to 100 m/minute and a press amount of the polishing roll set to 2 mm to form opening portions. Then, the membrane was dried at 60°C.

Further, 20% by mass of zirconium oxide having a primary particle size of 1 μm was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A as the membrane.

The coating density of zirconium oxide measured by fluorescent X-ray measurement was 0.5 mg/cm². Here, the average particle size was measured by a particle size analyzer (manufactured by SHIMADZU CORPORATION, "SALD(R) 2200").

(Electrode for electrolysis)

As the electrode for electrolysis, one described below was used.

A nickel foil having a gauge thickness of 30 μm was provided.

One surface of this nickel foil was subjected to roughening treatment by means of nickel plating.

The arithmetic average roughness Ra of the roughened surface was 0.95 μm.

For surface roughness measurement herein, a probe type surface roughness measurement instrument SJ-310 (Mitutoyo Corporation) was used.

A measurement sample was placed on the surface plate parallel to the ground surface to measure the arithmetic average roughness Ra under measurement conditions as described below. The measurement was repeated 6 times, and the average value was listed.

<Probe shape> conical taper angle = 60°, tip radius = 2 μm, static measuring force = 0.75 mN
<Roughness standard> JIS2001
<Evaluation curve> R
<Filter> GAUSS
<Cutoff value λc> 0.8 mm
<Cutoff value λs> 2.5 μm
<Number of sections> 5
<Pre-running, post-running> available

A porous foil was formed by perforating this nickel foil with circular holes by punching. The opening ratio was 44%.

A coating liquid for use in forming an electrode catalyst was prepared by the following procedure.

A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove.

The coating liquid was applied by allowing the substrate for electrode for electrolysis to pass between the second coating roll and the PVC roller at the uppermost portion (roll coating method). Then, drying at 50°C for 10 minutes, preliminary baking at 150°C for 3 minutes, and then baking at 350°C for 10 minutes were performed. A series of these coating, drying, preliminary baking, and baking operations was repeated until a predetermined amount of coating was achieved.

The thickness of the electrode for electrolysis produced was 38 $\mu$m.

The thickness of the catalytic layer containing ruthenium oxide and cerium oxide, which was determined by subtracting the thickness of the substrate for electrode for electrolysis from the thickness of the electrode for electrolysis, was 8 $\mu$m.

The coating was formed also on the surface not roughened.

(Method for evaluating physical properties of laminate of first embodiment)

<Measurement of amount of transition metal component(s) detected from ion exchange membrane A: XRF measurement>

The amount of the transition metal component(s) (with the proviso that zirconium is excluded) attached to the ion exchange membrane A was measured using a handheld X-ray fluorescence analyzer (Niton XL 3t-800S, Thermo Scientific K.K.).

Spectrum waveform data were read out, and the peak top value of the peak most intensively appeared of each element measured was employed.

For example, in the case of nickel (Ni), the $K\alpha$-ray peak top value (cps) appeared around 7.47 keV was regarded as the nickel amount at the measurement point.

The ion exchange membrane A was measured at five fixed points, and the average value was calculated.

The measurement mode is as follows.

Measurement mode: Precious Metal Mode

Measurement time: 20 seconds

<Storage test>

The ion exchange membrane A was cut into a size of 160 mm in length and 160 mm in width and immersed in a 3 mol/L NaCl aqueous solution for 24 hours or more.

The electrode for electrolysis was cut into a size of 95 mm in length X 110 mm in width.

The ion exchange membrane A and the electrode for electrolysis were laminated in accordance with the conditions described in Examples and Comparative Examples mentioned below to produce a laminate. The laminate was placed in a polyethylene bag sized to exactly receive the laminate, and 10 mL of a 3 mol/L NaCl aqueous solution (pH = 7) was added thereto in order to prevent the ion exchange membrane A from drying.

The polyethylene bag was sealed by thermally melting its mouth and stored in a thermostatic apparatus at 25°C.

The laminate was taken out after stored for 96 hours, and the electrode for electrolysis was removed from the laminate. Then, the surface of the ion exchange membrane A was washed with pure water.

Thereafter, the amount of the transition metal component(s) (with the proviso that zirconium is excluded) attached to the ion exchange membrane A was measured by XRF measurement.

Additionally, the amount of the transition metal component(s) (with the proviso that zirconium is excluded) attached to the ion exchange membrane A before the start of the storage test was measured by XRF measurement and denoted by X, and the amount of the transition metal component(s) after the storage for 96 hours was denoted by Y to calculate Y/X.

(Evaluation of properties of laminate of first embodiment)

<Common salt electrolysis>

An anode cell having an anode chamber in which an anode was provided (anode terminal cell, made of titanium) and a cathode cell having a cathode chamber in which a cathode was provided (cathode terminal cell, made of nickel) were oppositely disposed.

A pair of gaskets was arranged between the cells, and an ion exchange membrane A was sandwiched between the gaskets.

Then, the anode cell, the gasket, the ion exchange membrane A, the gasket, and the cathode were brought into close contact together to obtain an electrolytic cell.

As the anode, a so-called DSA(R) was employed, in which an oxide based on ruthenium, iridium, and titanium was formed on a titanium substrate.

On the cathode side, a nickel plain-woven wire mesh, which was cut into a size of 95 mm in length and 110 mm in width and the four sides of which were bent at a right angle by 2 mm, was attached.

As the collector, a nickel expanded metal was used. The collector had a size of 95 mm in length X 110 mm in width.

As a metal elastic body, a cushioning mat formed by knitting nickel fine wire having a diameter of 0.1 mm was used.

For assembly of the electrolytic cell, first, the cushioning mat as the metal elastic body was placed on the collector.

Then, the nickel wire mesh was placed over the cushioning mat with the bent portion of the nickel wire mesh facing the collector. Then, a string made of Teflon(R) was used to fix the four corners of the nickel wire mesh to the collector.

As the gaskets, ethylene-propylene-diene (EPDM) rubber gaskets were used.

As the ion exchange membrane A and electrode for electrolysis, those described in each of Examples and Comparative Examples were used.

The above electrolytic cell was used to perform electrolysis of common salt.

The brine concentration (sodium chloride concentration) in the anode chamber was adjusted to 205 g/L.

The sodium hydroxide concentration in the cathode chamber was adjusted to 32 wt%.

The temperature each in the anode chamber and the cathode chamber was adjusted such that the temperature in each electrolytic cell reached 90°C, and the electrolytic performance was measured.

<Measurement of current efficiency>

The current efficiency was evaluated by calculating the proportion of the amount of the produced caustic soda to the passed current.

When impurity ions and hydroxide ions rather than sodium ions move through the ion exchange membrane due to the passed current, the current efficiency decreases.

The current efficiency was calculated by dividing the number of moles of caustic soda produced for a certain time period by the number of moles of the electrons of the current passing during that time period.

The number of moles of caustic soda was calculated by recovering caustic soda produced by the electrolysis in a plastic container and measuring its mass.

The current efficiency measurement was conducted on one immediately after subjected to the <Storage test> described above and one after stored in the thermostatic apparatus at 25°C for 120 days in the <Storage test> described above.

<Common salt concentration in alkali>

The common salt concentration in alkali was measured, using the caustic soda collected on measuring the current efficiency as a measurement sample, by potentiometric titration with silver nitrate using a potentiometric titrator (Kyoto Electronics Manufacturing Co., Ltd., AT-610).

[Example 1]

A polyethylene sheet having a length of 180 mm, a width of 180 mm, and a thickness of 100 $\mu$m was sandwiched between the ion exchange membrane A and the electrode for electrolysis to perform the <Storage test>.

For the <Common salt electrolysis>, the polyethylene sheet was extracted between the ion exchange membrane A and the electrode for electrolysis before the measurement was performed.

[Example 2]

A PTFE sheet having a length of 180 mm, a width of 180 mm, and a thickness of 100 $\mu$m was sandwiched between the ion exchange membrane A and the electrode for electrolysis to perform the <Storage test>.

For the <Common salt electrolysis>, the PTFE sheet was extracted between the ion exchange membrane A and the electrode for electrolysis before the measurement was performed.

[Example 3]

A polyvinyl alcohol (PVA) sheet having a length of 180 mm, a width of 180 mm, and a thickness of 350 $\mu$m was sandwiched between the ion exchange membrane A and the electrode for electrolysis to perform the <Storage test>.

For the <Common salt electrolysis>, the PVA sheet was extracted between the ion exchange membrane A and the electrode for electrolysis before the measurement was performed.

[Example 4]

A polyethylene terephthalate (PET) sheet having a length of 180 mm, a width of 180 mm, and a thickness of 35 $\mu$m was sandwiched between the ion exchange membrane A and the electrode for electrolysis to perform the <Storage test>.

For the <Common salt electrolysis>, the PET sheet was extracted between the ion exchange membrane A and the electrode for electrolysis before the measurement was performed.

[Example 5-1]

The electrode for electrolysis was coated with PVA (polyvinyl alcohol) and then laminated with the ion exchange membrane A, and the <Storage test> was performed.

Specifically, a solution was obtained by dissolving a PVA powder having a polymerization degree of 500 and a saponification degree of 88% in pure water at 50°C at a concentration 5% by mass. The electrode for electrolysis was immersed in this solution and dried in a dryer at 50°C for 15 minutes to form a PVA coating. This operation was repeated three times.

This electrode for electrolysis was used to perform the <Storage test> and conduct the <Common salt electrolysis>.

[Example 5-2]

Used was a PVA having a polymerization degree of 1000 and a saponification degree of 96%. While the other conditions were kept the same as in the [Example 5-1], the <Storage test> was performed, and the <Common salt electrolysis> was conducted.

[Example 5-3]

Used was a PVA having a polymerization degree of 1650 and a saponification degree of 98%. While the other conditions were kept the same as in the [Example 5-1], the <Storage test> was performed, and the <Common salt electrolysis> was conducted.

[Example 5-4]

Used was a PVA having a polymerization degree of 3500 and a saponification degree of 88%. While the other conditions were kept the same as in the [Example 5-1], the <Storage test> was performed, and the <Common salt electrolysis> was conducted.

[Example 6]

The electrode for electrolysis was coated with PET (polyethylene terephthalate) and then laminated with the ion exchange membrane A, and the <Storage test> was performed.

Specifically, the electrode for electrolysis was sandwiched between two PET films each having a thickness of 25 $\mu$m and subjected to thermal compression. This electrode for electrolysis was used to perform the <Storage test> and conduct the <Common salt electrolysis>.

[Example 7]

An ion exchange membrane A equilibrated by immersion in a 3 mol/L NaCl aqueous solution adjusted to pH = 13 with NaOH for 24 hours was used to perform the <Storage test>.

In the <Storage test>, 10 mL of a 3 mol/L NaCl aqueous solution adjusted to pH = 13 with NaOH was used in order to prevent drying of the ion exchange membrane A.

A laminate of this ion exchange membrane and the electrode for electrolysis was used to conduct the <Common salt electrolysis>.

[Example 8]

An ion exchange membrane A equilibrated by immersion in a 3 mol/L NaCl aqueous solution adjusted to pH = 12 with NaOH for 24 hours was used to perform the <Storage test>.

In the <Storage test>, 10 mL of a 3 mol/L NaCl aqueous solution adjusted to pH = 12 with NaOH was used in order to prevent drying of the ion exchange membrane A.

A laminate of this ion exchange membrane and the electrode for electrolysis was used to conduct the <Common salt electrolysis>.

[Example 9]

An ion exchange membrane A equilibrated by immersion in a 3 mol/L NaCl aqueous solution adjusted to pH = 11 with NaOH for 24 hours was used to perform the <Storage test>.

In the <Storage test>, 10 mL of a 3 mol/L NaCl aqueous solution adjusted to pH = 11 with NaOH was used in order to prevent drying of the ion exchange membrane A.

A laminate of this ion exchange membrane and the electrode for electrolysis was used to conduct the <Common salt electrolysis>.

[Example 10]

An ion exchange membrane A equilibrated by immersion in a 3 mol/L NaCl aqueous solution adjusted to pH = 10 with NaOH for 24 hours was used to perform the <Storage test>.

In the <Storage test>, 10 mL of a 3 mol/L NaCl aqueous solution adjusted to pH = 10 with NaOH was used in order to prevent drying of the ion exchange membrane A.

A laminate of this ion exchange membrane and the electrode for electrolysis was used to conduct the <Common salt electrolysis>.

[Example 11]

An ion exchange membrane A equilibrated by immersion in a 3 mol/L NaCl aqueous solution adjusted to pH = 9 with NaOH for 24 hours was used to perform the <Storage test>.

In the <Storage test>, 10 mL of a 3 mol/L NaCl aqueous solution adjusted to pH = 9 with NaOH was used in order to prevent drying of the ion exchange membrane A.

A laminate of this ion exchange membrane and the electrode for electrolysis was used to measure the <Common salt electrolysis>.

[Comparative Example 1]

The ion exchange membrane A and electrode for electrolysis were superposed so as to be in a direct contact with each other, and the storage test was performed in accordance with the method described in the <Storage test> in a 3 mol/L NaCl aqueous solution (pH = 7) .

A laminate of this ion exchange membrane and the electrode for electrolysis was used to conduct the <Common salt electrolysis>.

[Comparative Example 2]

In Comparative Example 2, a membrane electrode assembly was produced by thermally compressing an electrode onto a membrane with reference to a prior art document (Examples of Japanese Patent Laid-Open No. 58-48686).

A nickel expanded metal having a gauge thickness of 100 $\mu$m and an opening ratio of 33% was used as the substrate for electrode for cathode electrolysis to perform electrode coating in the same manner as in Example 1 of the prior art document, in accordance with the following method.

A coating liquid for use in forming an electrode catalyst was prepared by the following procedure.

A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

A vat containing the above coating liquid was placed at the lowermost portion of a roll coating apparatus.

The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove.

The coating liquid was applied to a substrate for electrode for electrolysis by allowing the substrate for electrode for electrolysis to pass between the second coating roll and the PVC roller at the uppermost portion (roll coating method). Then, after drying at 50°C for 10 minutes, preliminary baking at 150°C for 3 minutes, and then baking at 350°C for 10 minutes were performed. A series of these coating, drying, preliminary baking, and baking operations was repeated until a predetermined amount of coating was achieved to thereby obtain an electrode for electrolysis.

The thickness of the electrode for electrolysis produced was 109 $\mu$m.

The thickness of the catalytic layer containing ruthenium oxide and cerium oxide, which was determined by subtracting the thickness of the substrate for electrode for electrolysis from the thickness of the electrode for electrolysis, was 9 $\mu$m.

The coating was formed also on the surface not roughened.

Thereafter, one surface of each electrode for electrolysis was subjected to an inactivation treatment in the following procedure. Polyimide adhesive tape (Chukoh Chemical Industries, Ltd.) was attached to one surface of the electrodes. A PTFE dispersion (Dupont-Mitsui Fluorochemicals Co., Ltd., 31-JR (trade name)) was applied onto the other surface and dried in a muffle furnace at 120°C for 10 minutes. The polyimide tape was peeled off, and a sintering treatment was performed in a muffle furnace set at 380°C for 10 minutes. This operation was repeated twice to inactivate the one surface of the electrodes.

Produced was a membrane formed by two layers of a perfluorocarbon polymer of which terminal functional group is "-COOCH$_3$" (C polymer) and a perfluorocarbon polymer of which terminal group is "-SO$_2$F" (S polymer).

The thickness of the C polymer layer was 3 mils, and the thickness of the S polymer layer was 4 mils.

This two-layer membrane was subjected to a saponification treatment to thereby introduce ion exchange groups to the terminals of the polymer by hydrolysis.

The C polymer terminals were hydrolyzed into carboxylic acid groups and the S polymer terminals into sulfo groups. The ion exchange capacity as the sulfonic acid group was 1.0 meq/g, and the ion exchange capacity as the carboxylic acid group was 0.9 meq/g.

The inactivated electrode surface was oppositely disposed to and thermally pressed onto the surface having carboxylic acid groups as the ion exchange groups to integrate the ion exchange membrane and the electrode. The one surface of each electrode was exposed even after the thermal compression, and the electrodes passed through no portion of the membrane.

Thereafter, in order to suppress attachment of bubbles to be generated during electrolysis to the membrane, a mixture of zirconium oxide and a perfluorocarbon polymer into which sulfo groups had been introduced was applied onto both the surfaces.

Thus, the membrane electrode assembly of Comparative Example 2 was produced.

This membrane electrode assembly was used to perform the <Storage test> and conduct the <Common salt electrolysis>.

[Experiment Examples 12 to 17, Comparative Experiment Example 3]

In these Experiment Examples and Comparative Experiment Examples, a test was conducted in which a nickel nitrate aqueous solution was used to adjust the amount of Ni attached to the ion exchange membrane A and the ion exchange membrane A was used to conduct common salt electrolysis.

The ion exchange membrane A was immersed in the nickel nitrate aqueous solution and washed with pure water.

The concentration of the nickel nitrate and immersion time were varied as described below to produce ion exchange membranes A to which the amount of Ni of each of Experiment Examples 12 to 17 and Comparative Experiment Example 3 shown in Table 1 below was attached.

A laminate was produced from each of these ion exchange membranes A and the electrode for electrolysis, and the <Common salt electrolysis> was performed. The results are shown in Table 1.

In Experiment Example 12, the laminate was immersed in a nickel nitrate aqueous solution prepared to have a nickel concentration of $1 \times 10^{-6}$ mol/L for 19 hours.

In Experiment Example 13, the laminate was immersed in a nickel nitrate aqueous solution prepared to have a nickel concentration of $1 \times 10^{-4}$ mol/L for 19 hours.

In Experiment Example 14, the laminate was immersed in a nickel nitrate aqueous solution prepared to have a nickel concentration of $5 \times 10^{-4}$ mol/L for 19 hours.

In Experiment Example 15, the laminate was immersed in a nickel nitrate aqueous solution prepared to have a nickel concentration of $1 \times 10^{-3}$ mol/L for 19 hours.

In Experiment Example 16, the laminate was immersed in a nickel nitrate aqueous solution prepared to have a nickel concentration of 1 X 10$^{-3}$ mol/L for 30 hours.

In Experiment Example 17, the laminate was immersed in a nickel nitrate aqueous solution prepared to have a nickel concentration of 1 X 10$^{-2}$ mol/L for 24 hours.

In Experiment Example 12, the laminate was immersed in a nickel nitrate aqueous solution prepared to have a nickel concentration of 1 X 10$^{-6}$ mol/L for 19 hours.

In Comparative Experiment Example 3, the laminate was immersed in a nickel nitrate aqueous solution prepared to have a nickel concentration of 0.1 mol/L for 24 hours.

[Table 1]

| | Protection method | Ni amount/cps | Y/X | Current efficiency/ % | Common salt concentration in alkali/ppm | Current efficiency after storage for 120 davs/% |
|---|---|---|---|---|---|---|
| Example 1 | Polyethylene sheet | 4.9 | 1.1 | 97.4 | 18 | 97.5 |
| Example 2 | PTFE sheet | 4.8 | 1.1 | 97.5 | 21 | 97.5 |
| Example 3 | PVA sheet | 15.0 | 3.3 | 96.5 | 20 | 96.6 |
| Example 4 | PET sheet | 5.5 | 1.2 | 97.2 | 20 | 97.1 |
| Example 5-1 | PVA coating | 36.8 | 8.2 | 96.0 | 22 | 96.2 |
| Example 5-2 | PVA coating | 35.5 | 7.9 | 96.1 | 23 | 96.0 |
| Example 5-3 | PVA coating | 12.0 | 2.7 | 96.4 | 24 | 96.2 |
| Example 5-4 | PVA coating | 11.3 | 2.5 | 96.5 | 20 | 96.4 |
| Example 6 | PET coating | 5.2 | 1.2 | 97.2 | 19 | 97.4 |
| Example 7 | pH13 aqueous solution | 4.8 | 1.1 | 97.3 | 18 | 97.5 |
| Example 8 | pH12 aqueous solution | 26.7 | 5.9 | 96.3 | 25 | 96.2 |
| Example 9 | pH11 aqueous solution | 30.6 | 6.8 | 96.2 | 27 | 96.1 |
| Example 10 | pH10 aqueous solution | 36.5 | 8.1 | 96.0 | 29 | 95.8 |
| Example 11 | pH9 aqueous solution | 46.2 | 10.3 | 95.8 | 27 | 95.5 |
| Experiment Example 12 | | 4.4 | 1.0 | 97.3 | 21 | - |
| Experiment Example 13 | | 6.4 | 1.4 | 96.2 | 25 | - |
| Experiment Example 14 | No protection (immersed in Ni nitrate aqueous solution) | 9.9 | 2.2 | 96.3 | 23 | - |
| Experiment Example 15 | | 12.8 | 2.8 | 96.2 | 20 | - |
| Experiment Example 16 | | 21.1 | 4.7 | 96.4 | 20 | - |
| Experiment Example 17 | | 97.4 | 21.6 | 94.5 | 27 | - |
| Comparative Example 1 | No protection | 114.9 | 25.5 | 93.3 | 26 | 91.1 |

(continued)

|  | Protection method | Ni amount/cps | Y/X | Current efficiency/ % | Common salt concentration in alkali/ppm | Current efficiency after storage for 120 days/% |
|---|---|---|---|---|---|---|
| Comparative Example 2 | Conventional thermally-compressed laminate | 122.0 | 27.1 | 92.6 | 27 | 90.4 |
| Comparative Experiment Example 3 | No protection (immersed in Ni nitrate aqueous solution) | 339.9 | 75.5 | 77.4 | 106 | - |

When the amount of Ni detected from the membrane was 100 cps or less, high current efficiency was obtained, and the common salt concentration in alkali decreased.

Note that "-" in "Current efficiency after storage of 120 days" in Table 1 means the data were not acquired. In these Experiment Examples and Comparative Experiment Example, when the ion exchange membrane was immersed in a nickel nitrate aqueous solution and each amount of nickel was adjusted and caused to attach to the membrane, the electrolytic performance was experimentally confirmed. Thus, a test for measuring the current efficiency after storage of 120 days was not conducted.

[Examples and Comparative Examples of protective laminate of second embodiment]

[Example 18]

<Ion exchange membrane>

As the membrane for use in production of the laminate, an ion exchange membrane A produced as described below was used.

As reinforcement core materials, 90 denier monofilaments made of polytetrafluoroethylene (PTFE) were used (hereinafter referred to as PTFE yarns). As the sacrifice yarns, yarns obtained by twisting six 35 denier filaments of polyethylene terephthalate (PET) 200 times/m were used (hereinafter referred to as PET yarns). First, in each of the TD and the MD, the PTFE yarns and the sacrifice yarns were plain-woven with 24 PTFE yarns/inch so that two sacrifice yarns were arranged between adjacent PTFE yarns, to obtain a woven fabric. The resulting woven fabric was pressure-bonded by a roll to obtain a reinforcing material as a woven fabric having a thickness of 70 $\mu$m.

Next, a resin A of a dry resin that is a copolymer of $CF_2=CF_2$ and $CF_2=CFOCF_2CF(CF_3)OCF_2CF_2COOCH_3$ and has an ion exchange capacity of 0.85 mg equivalent/g, and a resin B of a dry resin that is a copolymer of $CF_2=CF_2$ and $CF_2=CFOCF_2CF(CF_3)OCF_2CF_2SO_2F$ and has an ion exchange capacity of 1.03 mg equivalent/g were provided.

Using these resins A and B, a two-layer film X in which the thickness of a resin A layer is 15 $\mu$m and the thickness of a resin B layer was 84 $\mu$m is obtained by a coextrusion T die method. Using only the resin B, a single-layer film Y having a thickness of 20 $\mu$m was obtained by a T die method.

Subsequently, release paper (embossed in a conical shape having a height of 50 $\mu$m), the film Y, a reinforcing material, and the film X were laminated in this order on a hot plate having a heat source and a vacuum source inside and having micropores on its surface, heated and depressurized under the conditions of a hot plate surface temperature of 223°C and a degree of reduced pressure of 0.067 MPa for 2 minutes, and then the release paper was removed to obtain a composite membrane.

The film X was laminated such that the resin B was positioned as the lower surface.

The resulting composite membrane was immersed in an aqueous solution at 80°C comprising 30% by mass of dimethyl sulfoxide (DMSO) and 15% by mass of potassium hydroxide (KOH) for 20 minutes for saponification. Then, the composite membrane was immersed in an aqueous solution at 50°C comprising 0.5 N sodium hydroxide (NaOH) for 1 hour to replace the counterion of the ion exchange group by Na, and then washed with water. Thereafter, the surface on the side of the resin B was polished with a relative speed between a polishing roll and the membrane set to 100 m/minute and a press amount of the polishing roll set to 2 mm to form opening portions. Then, the membrane was dried at 60°C.

Further, 20% by mass of zirconium oxide having a primary particle size of 1 μm was added to a 5% by mass ethanol solution of the acid-type resin of the resin B and dispersed to prepare a suspension, and the suspension was sprayed onto both the surfaces of the above composite membrane by a suspension spray method to form coatings of zirconium oxide on the surfaces of the composite membrane to obtain an ion exchange membrane A as the membrane.

The coating density of zirconium oxide measured by fluorescent X-ray measurement was 0.5 mg/cm$^2$. Here, the average particle size was measured by a particle size analyzer (manufactured by SHIMADZU CORPORATION, "SALD(R) 2200").

<Method for producing electrode for electrolysis 1 (first electrode for electrolysis)>

(Step 1)

As a substrate for electrode for electrolysis, provided was a nickel foil having a gauge thickness of 30 μm, which had been subjected to roughening treatment by means of electrolytic nickel plating.

(Step 2)

A porous foil was formed by perforating this nickel foil with circular holes having a diameter of 1 mm by punching. The opening ratio was 44%.

(Step 3)

A cathode coating liquid for use in forming an electrode catalyst was prepared by the following procedure. A ruthenium nitrate solution having a ruthenium concentration of 100 g/L (FURUYA METAL Co., Ltd.) and cerium nitrate (KISHIDA CHEMICAL Co., Ltd.) were mixed such that the molar ratio between the ruthenium element and the cerium element was 1:0.25. This mixed solution was sufficiently stirred and used as a cathode coating liquid.

(Step 4)

A vat containing the above cathode coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the cathode coating liquid. A coating roll around which the same EPDM had been wound was placed at the upper portion thereof, and a PVC roller was further placed thereabove.

The cathode coating liquid was applied by allowing the porous foil formed in the above (step 2) (substrate for electrode) to pass between the second coating roll and the PVC roller at the uppermost portion (roll coating method). Then, after drying at 50°C for 10 minutes, preliminary baking at 150°C for 3 minutes, and baking at 400°C for 10 minutes were performed. A series of these coating, drying, preliminary baking, and baking operations was repeated until a predetermined amount of coating was achieved.

Thus, an electrode for cathode electrolysis was produced. The thickness of the electrode after coating was 37 μm. The thickness of the coating was 7 μm, obtained by subtracting the thickness of the substrate.

For measurement of the thickness of the electrode for electrolysis, a digimatic thickness gauge (manufactured by Mitutoyo Corporation, minimum scale 0.001 mm) was used.

<Method for producing electrode for electrolysis 2 (second electrode for electrolysis)>

A titanium foil having a gauge thickness of 20 μm was provided as the substrate for electrode for electrolysis. Both the surfaces of the titanium foil were subjected to a roughening treatment. A porous foil was formed by perforating this titanium foil with circular holes by punching. The hole diameter was 1 mm, and the opening ratio was 34%. The arithmetic average roughness Ra of the surface was 0.37 μm. The measurement of the surface roughness was performed under the same conditions as for the surface roughness measurement of the nickel plate subjected to the blast treatment.

A coating liquid for use in forming an electrode catalyst was prepared by the following procedure. A ruthenium chloride solution having a ruthenium concentration of 100 g/L (Tanaka Kikinzoku Kogyo K.K.), iridium chloride having an iridium concentration of 100 g/L (Tanaka Kikinzoku Kogyo K.K.), and titanium tetrachloride (Wako Pure Chemical Industries, Ltd.) were mixed such that the molar ratio among the ruthenium element, the iridium element, and the titanium element was 0.25:0.25:0.5. This mixed solution was sufficiently stirred and used as an anode coating liquid.

A vat containing the above coating liquid was placed at the lowermost portion of a roll coating apparatus. The vat was placed such that a coating roll formed by winding rubber made of closed-cell type foamed ethylene-propylene-diene rubber (EPDM) (INOAC CORPORATION, E-4088, thickness 10 mm) around a polyvinyl chloride (PVC) cylinder was always in contact with the coating liquid. A coating roll around which the same EPDM had been wound was placed at the upper portion thereof, and a PVC roller was further placed thereabove. The coating liquid was applied by allowing the substrate for electrode to pass between the second coating roll and the PVC roller at the uppermost portion (roll coating method). After the above coating liquid was applied onto the titanium porous foil, drying at 60°C for 10 minutes and baking at 475°C for 10 minutes were performed. A series of these coating, drying, preliminary baking, and baking operations was repeatedly performed, and then baking at 520°C was performed for an hour.

The thickness of the electrode after coating was 26 $\mu$m. The thickness of the coating was 6 $\mu$m, obtained by subtracting the thickness of the substrate.

<Production of laminate and wound body>

The ion exchange membrane A and the electrodes for electrolysis 1 and 2 were each cut into a size of 200 mm X 600 mm. On one surface of the ion exchange membrane A immersed in a 3% NaHCO$_3$ aqueous solution for 24 hours, the electrode for electrolysis 1 was stacked and laminated. The electrode for electrolysis 1 was laminated on the ion exchange membrane A, as if they stick together, by the interfacial tension of moisture attached on the surface of the ion exchange membrane A.

Thereafter, the electrode for electrolysis 2 was laminated in the same manner on the surface opposite to the surface on which the electrode for electrolysis 1 was laminated. Thus, obtained was a laminate in which the electrode for electrolysis 1, the ion exchange membrane A, and the electrode for electrolysis 2 were laminated.

A polyethylene resin sheet was stacked as an insulation sheet on the electrode for electrolysis 1 of this laminate to form a protective laminate.

The laminate was wound around a vinyl chloride pipe having a diameter of 30 mm such that the polyethylene insulation sheet was positioned on the outer circumferential side to form a wound body. At this time, the polyethylene resin sheet was sandwiched between the electrodes for electrolysis 1 and 2, and thus there was no portion at which the electrodes were in contact with each other.

This wound body was placed in a polyethylene bag, and 200 mL of a 3% NaHCO$_3$ aqueous solution was placed in the bag for the purpose of preventing drying of the ion exchange membrane A. The opening portion was heat-sealed to seal the bag, which was stored for a month. The outside air temperature during storage was in the range of 20 to 30°C, including fluctuations between day and night.

After one month, the laminate was taken out and observed. No damage such as coming off of the coating was observed in the electrodes for electrolysis 1 and 2.

[Example 19]

Provided were an ion exchange membrane A and electrode for electrolysis 1 and 2 identical to those of Example 18.

The electrode for electrolysis 1, the ion exchange membrane A, the electrode for electrolysis 2, and the polyethylene sheet were laminated in this order in a flat placed state to form a protective laminate. The electrode for electrolysis 1, the ion exchange membrane A, the electrode for electrolysis 2, and the polyethylene sheet were stacked thereon in the same order. Additional 3 sets of the laminates were further stacked thereon in a flat placed state, and thus, totally 5 sets of the laminates were stacked.

At this time, there was no portion at which the electrodes for electrolysis 1 and 2 were in a direct contact with each other because the polyethylene sheet was present therebetween.

The 5 sets of the laminates were placed in a polyethylene bag, and 300 mL of a 3% NaHCO$_3$ aqueous solution was placed in the bag for the purpose of preventing drying of the ion exchange membranes A. The opening portion was heat-sealed to seal the bag, which was stored for a month.

The outside air temperature during storage was in the range of 20 to 30°C, including fluctuations between day and night. After one month, the laminate was taken out and observed. No damage such as coming off of the coating was observed in any of the electrodes for electrolysis 1 and 2.

[Example 20]

The test was performed in the same manner as in Example 18 except that a polyethylene terephthalate sheet was used as an insulation sheet.

After one month, the laminate was taken out and observed. No damage such as coming off of the coating was observed in the electrodes for electrolysis 1 and 2.

[Example 21]

The test was performed in the same manner as in Example 19 except that a polyethylene terephthalate sheet was used as an insulation sheet.

After one month, the laminate was taken out and observed. No damage such as coming off of the coating was observed in the electrodes for electrolysis 1 and 2.

[Example 22]

The test was performed in the same manner as in Example 18 except that a Teflon(R) sheet was used as an insulation sheet.

After one month, the laminate was taken out and observed. No damage such as coming off of the coating was observed in the electrodes for electrolysis 1 and 2.

[Example 23]

The test was performed in the same manner as in Example 19 except that a Teflon(R) sheet was used as an insulation sheet.

After one month, the laminate was taken out and observed. No damage such as coming off of the coating was observed in the electrodes for electrolysis 1 and 2.

[Example 24]

The test was performed in the same manner as in Example 18 except that water repellent paper was used as an insulation sheet.

After one month, the laminate was taken out and observed. No damage such as coming off of the coating was observed in the electrodes for electrolysis 1 and 2.

[Example 25]

The test was performed in the same manner as in Example 19 except that water repellent paper was used as an insulation sheet.

After one month, the laminate was taken out and observed. No damage such as coming off of the coating was observed in the electrodes for electrolysis 1 and 2.

[Example 26]

The test was performed in the same manner as in Example 18 except that an acrylic resin having a thickness of 1 mm was used as an insulation sheet.

After one month, the laminate was taken out and observed. No damage such as coming off of the coating was observed in the electrodes for electrolysis 1 and 2.

[Example 27]

The test was performed in the same manner as in Example 19 except that an acrylic resin having a thickness of 1 mm was used as an insulation sheet.

After one month, the laminate was taken out and observed. No damage such as coming off of the coating was observed in the electrodes for electrolysis 1 and 2.

[Comparative Example 4]

A laminate was produced in the same manner as in Example 18 except that no polyethylene resin sheet was used, and the storage test was performed.

After one month, the laminate was taken out and observed. Slight coloration was observed in the water droplets attached to the ion exchange membrane. It is conceived that the electrodes for electrolysis 1 and 2 came into contact with each other because no polyethylene resin sheet was sandwiched therebetween and a portion of the components of the electrodes for electrolysis was eluted.

[Comparative Example 5]

A laminate was produced in the same manner as in Example 19 except that no polyethylene resin sheet was used, and the storage test was performed.

After one month, the laminate was taken out and observed. Slight coloration was observed in the water droplets attached to the ion exchange membrane. It is conceived that the electrodes for electrolysis 1 and 2 came into contact with each other because no polyethylene resin sheet was sandwiched therebetween and a portion of the components of the electrodes for electrolysis was eluted.

The present application is based on a Japanese Patent Application (Japanese Patent Application No. 2018-177171) filed on Sep. 21, 2018 and a Japanese Patent Application (Japanese Patent Application No. 2018-177302) filed on Sep. 21, 2018, the content of which is incorporated herein by reference.

Industrial Applicability

The laminate and protective laminate of the present invention have industrial applicability as a laminate for replacement of a member of an electrolyzer.

Reference Signs List

Reference signs list for Figure 1

10 ... substrate for electrode for electrolysis
20 ... first layer with which the substrate is covered
30 ... second layer
101 ... electrode for electrolysis

Reference signs list for Figure 2

| | |
|---|---|
| 1 | ion exchange membrane |
| 1a | membrane body |
| 2 | carboxylic acid layer |
| 3 | sulfonic acid layer |
| 4 | reinforcement core material |
| 11a, 11b | coating layer |

Reference signs list for Figure 3

| | |
|---|---|
| 21a, 21b | reinforcement core material |

Reference signs list for Figures 4(A) and 4(B)

| | |
|---|---|
| 52 | reinforcement yarn |
| 504 | continuous hole |
| 504a | sacrifice yarn |

Reference signs list for Figure 5 to Figure 9

| | |
|---|---|
| 4 | electrolyzer |
| 5 | press device |
| 6 | cathode terminal |
| 7 | anode terminal |
| 11 | anode |
| 12 | anode gasket |
| 13 | cathode gasket |
| 18 | reverse current absorber |
| 18a | substrate |

18b     reverse current absorbing layer
19     bottom of anode chamber
21     cathode
22     metal elastic body
23     collector
24     support
50     electrolytic cell
60     anode chamber
51     ion exchange membrane (membrane)
70     cathode chamber
80     partition wall
90     cathode structure for electrolysis

Reference signs list for Figures 10 to 13

1A, 1B, 1C, 1D ... first electrode for electrolysis,
2A, 2B, 2C, 2D ... membrane
3A, 3B, 3C, 3D ... second electrode for electrolysis, 4A, 4B, 4C, 4D ... insulation sheet
5B, 5D ... core body
10A, 10B ... protective laminate
10C, 10D ... laminate

**Claims**

1. A laminate comprising:

   an electrode for electrolysis, and
   a membrane laminated on the electrode for electrolysis, wherein
   when the laminate is wetted with a 3 mol/L NaCl aqueous solution, and under storage conditions at ordinary temperature,
   an amount of a transition metal component (with the proviso that zirconium is excluded), detected from the membrane after the storage for 96 hours, is 100 cps or less.

2. The laminate according to claim 1, wherein the transition metal is at least one selected from the group consisting of Ni and Ti.

3. The laminate according to claim 1 or 2, wherein,
   when the laminate wetted with a 3 mol/L NaCl aqueous solution is stored under the storage condition at ordinary temperature;
   an amount of a transition metal component detected from the membrane before the storage for 96 hours is denoted by X; and
   the amount of a transition metal component detected from the membrane after the storage for 96 hours under storage conditions at ordinary temperature is denoted by Y,
   (Y/X) is 20 or less.

4. The laminate according to any one of claims 1 to 3, wherein
   the laminate is wetted with the 3 mol/L NaCl aqueous solution, and in a stage before storage for 96 hours under the storage condition at ordinary temperature,
   the electrode for electrolysis constituting the laminate is wetted with an aqueous solution having a pH $\geq$ 10.

5. The laminate according to any one of claims 1 to 4, comprising an ion impermeable layer between the electrode for electrolysis and the membrane.

6. The laminate according to claim 5, wherein the ion impermeable layer is at least one selected from the group consisting of a fluorine polymer and a hydrocarbon polymer.

7. A method for storing a laminate comprising:

an electrode for electrolysis, and
a membrane laminated on the electrode for electrolysis, wherein
when the laminate is wetted with a 3 mol/L NaCl aqueous solution, and under a storage condition at ordinary temperature,
an amount of transition metal components (with the proviso that zirconium is excluded), detected from the membrane after the storage for 96 hours, is maintained within 100 cps or less.

8. The method for storing a laminate according to claim 7, wherein
the electrode for electrolysis is brought into a state where the electrode is wetted with the aqueous solution having a pH $\geq$ 10,
in a stage before the electrode wetted with the 3 mol/L NaCl aqueous solution is stored for 96 hours under the storage condition at ordinary temperature.

9. The method for storing a laminate according to claim 7 or 8, wherein an ion impermeable layer is disposed between the electrode for electrolysis and the membrane.

10. The method for storing a laminate according to any one of claims 7 to 9, wherein the laminate is stored in a state of a wound body in which the laminate is wound.

11. A method for transporting a laminate comprising:

an electrode for electrolysis, and
a membrane laminated on the electrode for electrolysis, wherein
during the transport,
when the laminate is wetted with a 3 mol/L NaCl aqueous solution, and under a storage condition at ordinary temperature,
an amount of a transition metal component (with the proviso that zirconium is excluded), detected from the membrane after the storage for 96 hours, is maintained within 100 cps or less.

12. The method for transporting a laminate according to claim 11, wherein
the electrode for electrolysis is transported in a state where the electrode is wetted with an aqueous solution having a pH $\geq$ 10.

13. The method for transporting a laminate according to claim 11 or 12, wherein the laminate is transported in a state where an ion impermeable layer is disposed between the electrode for electrolysis and the membrane.

14. The method for transporting a laminate according to any one of claims 11 to 13, wherein the laminate is transported in a state of a wound body in which the laminate is wound.

15. A protective laminate comprising a first electrode for electrolysis, a second electrode for electrolysis, a membrane disposed between the first electrode for electrolysis and the second electrode for electrolysis, and an insulation sheet that protects at least one of a surface of the first electrode for electrolysis and a surface of the second electrode for electrolysis.

16. The protective laminate according to claim 15, wherein a material for forming the insulation sheet is a flexible material.

17. The protective laminate according to claim 16, wherein the flexible material is at least one selected from the group consisting of a resin that is solid at ordinary temperature, an oil that is solid at ordinary temperature, and paper.

18. The protective laminate according to any one of claims 15 to 17, wherein the material for forming the insulation sheet is a rigid material.

19. The protective laminate according to claim 18, wherein the rigid material is at least one selected from the group consisting of a resin that is solid at ordinary temperature and paper.

20. The protective laminate according to any one of claims 15 to 19, wherein the material for forming the insulation sheet is a material having a peelable property.

**21.** The protective laminate according to claim 20, wherein the material having a peelable property is at least one selected from the group consisting of a resin that is solid at ordinary temperature, an oil that is solid at ordinary temperature, and paper.

**22.** A wound body comprising wound protective laminate according to any one of claims 15 to 22.

Fig.1

Fig.2

Fig.3

Fig.4

(A)

(B)

Fig.5

Fig.6

Fig.7

Fig.8

Fig.9

Fig.10

Fig.11

4B
3B
2B
1B
10B

5B

Fig.12

3C
2C
1C
10C

3C
2C
1C
10C

Fig.13

5D

3D
2D
1D
10D

## INTERNATIONAL SEARCH REPORT

| International application No. |
|---|
| PCT/JP2019/035859 |

A. CLASSIFICATION OF SUBJECT MATTER
Int.Cl. C25B15/00(2006.01)i, B32B7/00(2019.01)i, C25B11/00(2006.01)i

According to International Patent Classification (IPC) or to both national classification and IPC

B. FIELDS SEARCHED

Minimum documentation searched (classification system followed by classification symbols)
Int.Cl. C25B15/00, B32B7/00, C25B11/00

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2006-322053 A (SANO, Yoichi) 30 November 2006,<br>claim 1, paragraph [0010]<br>& US 2006/0260931 A1, claim 1, paragraph [0025] &<br>WO 2006/127633 A2 & EP 1926842 A2 | 1-4<br>5-22 |
| X<br>A | JP 2012-069462 A (DAI NIPPON PRINTING CO., LTD.)<br>05 April 2012, claim 8, paragraphs [0005], [0026],<br>[0027]<br>(Family: none) | 15-22<br>1-14 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30.09.2019 | 21.10.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/035859 |

C (Continuation). DOCUMENTS CONSIDERED TO BE RELEVANT

| Category* | Citation of document, with indication, where appropriate, of the relevant passages | Relevant to claim No. |
| --- | --- | --- |
| P, A | WO 2018/174199 A1 (ASAHI KASEI CORPORATION) 27 September 2018, claims 45-53 & JP 2018-159130 A & JP 2018-159129 A & TW 201840907 A | 1-22 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58048686 A
- JP 55148775 A
- WO 2013183584 A
- WO 2016203701 A
- JP 2018177171 A
- JP 2018177302 A